(19) **Europäisches Patentamt / European Patent Office / Office européen des brevets**

(11) **EP 4 572 354 A1**

(12) **EUROPEAN PATENT APPLICATION**
published in accordance with Art. 153(4) EPC

(43) Date of publication:
**18.06.2025 Bulletin 2025/25**

(21) Application number: **22955236.9**

(22) Date of filing: **15.08.2022**

(51) International Patent Classification (IPC):
**H04W 8/24** (2009.01)

(52) Cooperative Patent Classification (CPC):
**H04W 8/24**

(86) International application number:
**PCT/CN2022/112596**

(87) International publication number:
**WO 2024/036454 (22.02.2024 Gazette 2024/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- WANG, Fei
  Shenzhen, Guangdong 518129 (CN)
- PENG, Chenghui
  Shenzhen, Guangdong 518129 (CN)
- LU, Jiaxun
  Shenzhen, Guangdong 518129 (CN)
- WU, Jianjun
  Shenzhen, Guangdong 518129 (CN)

(74) Representative: **Gill Jennings & Every LLP**
**The Broadgate Tower**
**20 Primrose Street**
**London EC2A 2ES (GB)**

(54) **DATA FEATURE MEASUREMENT METHOD AND RELATED DEVICE**

(57) This application discloses a data feature measurement method and a related apparatus, and relates to the field of communication technologies. The data feature measurement method includes: A first network element sends first information, where the first information includes information about a first service for which the first network element performs collaborative training, and the first information is used to request to perform data feature measurement on first data corresponding to the first service; the first network element receives second information, where the second information includes first feature information obtained by performing data feature measurement on the first data; and the first network element determines, based on the second information, a first collaboration set used to perform the first service. According to this method, a collaboration set may be obtained by measuring a data feature of a network element, to improve collaboration efficiency of the network element and further improve network AI performance.

FIG. 3

## Description

### TECHNICAL FIELD

This application relates to the field of communication technologies, and in particular, to a data feature measurement method and a related apparatus.

### BACKGROUND

As future communication scenarios become complex, service requirements become diversified, and service experience becomes personalized, it is urgent to introduce artificial intelligence (artificial intelligence, AI) into a communication network. Accordingly, a network data analytics function (network data analytics function, NWDAF) is proposed to support the AI in the communication network. The NWDAF is a data perception and analysis network element, performs automatic perception and analysis on a network based on network data, and participates in a full lifecycle of the network: planning, construction, maintenance, optimization, and operation. This facilitates network maintenance and control and improves network resource utilization.

Currently, there are a plurality of levels of network elements in the communication network, and network elements at different levels have different data resources. Because a data resource of a single network element is limited, network AI performance cannot be fully utilized. Therefore, data of a plurality of network elements in the network is usually used to perform collaboration between the plurality of network elements, to improve the network AI performance.

However, currently, collaboration efficiency of the plurality of network elements is low, resulting in low network AI performance.

### SUMMARY

Embodiments of this application provide a data feature measurement method and a related apparatus, so that a collaboration set may be obtained by measuring a data feature of a network element, to improve collaboration efficiency of the network element and further improve network AI performance.

According to a first aspect, an embodiment of this application provides a data feature measurement method. The method includes:

A first network element sends first information, where the first information includes information about a first service for which the first network element performs collaborative training, and the first information is used to request to perform data feature measurement on first data corresponding to the first service;

the first network element receives second information, where the second information includes first feature information obtained by performing data feature measurement on the first data; and

the first network element determines, based on the second information, a first collaboration set used to perform the first service.

In this embodiment of this application, the data feature measurement method is provided. The first network element sends the first information, receives the second information, and determines, based on the second information, the first collaboration set used to perform the first service. The first information includes the information about the first service for which the first network element performs collaborative training. The first information is used to request to perform data feature measurement on the first data corresponding to the first service. The second information includes the first feature information obtained by performing data feature measurement on the first data corresponding to the first service. According to this embodiment of this application, the first network element may obtain a data feature of each data supply network element by sending the first information and receiving the second information, so that the first collaboration set can be determined based on a requirement of the first service for which the first network element performs collaborative training, where the determined first collaboration set is used to perform the first service. This can improve collaboration efficiency of the network element, avoid invalid training, reduce energy consumption and transmission resources, and further improve network AI performance.

In a possible implementation, the first information further includes at least one of the following: information about a first measurement model and information about a first measurement parameter. The first information is used to request to perform data feature measurement on the first data based on at least one of the first measurement model and the first measurement parameter.

In an implementation of this application, a possible specific implementation of the first information is provided. Specifically, the first information may include at least one of the information about the first measurement model and the information about the first measurement parameter. In this case, the first information is used to request to perform, based on at least one of the information about the first measurement model and the information about the first measurement parameter, data feature measurement on the first data corresponding to the first service. Correspondingly, each data supply network element may perform data feature measurement on the first data based on at least one of the information about the first measurement model and the information about the first measurement parameter, to obtain the first feature information. According to this embodiment of this application, each data supply network element may perform, based on a plurality of different types of content included in the first information, data feature measurement on the first data corresponding to the first service, to obtain the first feature information. The first feature information may be used to assist the first network element in determining the first collaboration set used to perform the first service, to improve the collaboration efficiency of the network element and further improve the network AI performance.

In a possible implementation, the first feature information includes gradient information corresponding to a second network element, and the second network element includes a network element that performs data feature measurement on the first data.

In an implementation of this application, a possible specific implementation of the first feature information is provided. Specifically, the first feature information includes the gradient information corresponding to the second network element, and the second network element includes at least one data supply network element that performs data feature measurement on the first data corresponding to the first service. According to this embodiment of this application, the first feature information obtained by performing data feature measurement by each data supply network element includes gradient information corresponding to each data supply network element. The gradient information may be used to assist the first network element in determining the first collaboration set used to perform the first service, to improve the collaboration efficiency of the network element and further improve the network AI performance.

In a possible implementation, the second information further includes first computing power information, and the first computing power information includes information about a computing power of the second network element for measuring the first data.

In an implementation of this application, a possible specific implementation of the second information is provided. Specifically, the second information further includes the first computing power information, and the first computing power information includes information about a computing power of each data supply network element for performing data feature measurement on the first data corresponding to the first service. According to this embodiment of this application, the second information fed back by each data supply network element to the first network element includes the information about the computing power of each data supply network element for performing data feature measurement on the first data corresponding to the first service. The information about the computing power may be used to assist the first network element in determining the first collaboration set used to perform the first service, to improve the collaboration efficiency of the network element and further improve the network AI performance.

In a possible implementation, the determining, based on the second information, a first collaboration set used to perform the first service includes:

obtaining a data difference degree based on the gradient information corresponding to the second network element and gradient information corresponding to at least one third network element, where the data difference degree represents a difference between the first data in the second network element and data in the at least one third network element, and the data in the at least one third network element includes data that corresponds to the first service and that is in the at least one third network element; and

determining, based on at least one of the data difference degree and the first computing power information, the first collaboration set used to perform the first service.

In an implementation of this application, a possible specific implementation of determining the first collaboration set is provided. Specifically, the first network element obtains, based on gradient information corresponding to each data supply network element, a data difference degree corresponding to each data supply network element, and determines, based on at least one of the data difference degree and the first computing power information that correspond to each data supply network element, the first collaboration set used to perform the first service. For example, the first network element obtains, based on the gradient information corresponding to the second network element and the gradient information corresponding to the at least one third network element, the data difference degree corresponding to the second network element, and determines, based on at least one of the data difference degree and the first computing power information that correspond to the second network element, the first collaboration set used to perform the first service. According to this embodiment of this application, the first network element may obtain the data difference degree and the first computing power information that are of each data supply network element, and determine the first collaboration set based on at least one of the data difference degree and the first computing power information that are of each data supply network element and a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

In a possible implementation, the data difference degree includes:

$$DG = \frac{\sum_{j=1}^{N} |\nabla\_j|^2 + |\nabla\_local|^2}{\left|\sum_{j=1}^{N} \nabla\_j + \nabla\_local\right|^2},$$

where
DG is the data difference degree, $\nabla\_local$ is the gradient information corresponding to the second network ele-

ment, $\nabla\_j$ includes the gradient information corresponding to the at least one third network element, and N is a quantity of third network elements.

In an implementation of this application, a possible specific implementation of the data difference degree is provided. Specifically, the first feature information includes the gradient information corresponding to each data supply network element, for example, includes the gradient information of the second network element and the gradient information of the at least one third network element. A formula method for calculating the data difference degree corresponding to the gradient information of the second network element and the gradient information of the at least one third network element is provided based on the gradient information of the second network element and the gradient information of the at least one third network element. According to this embodiment of this application, the data difference degree may be calculated based on the foregoing formula and the gradient information of the second network element and the gradient information of the at least one third network element, so that the difference between the data in the second network element and the data in the at least one third network element can be accurately measured, to determine the first collaboration set used to perform the first service.

In a possible implementation, the determining, based on at least one of the data difference degree and the first computing power information, the first collaboration set used to perform the first service includes:

when the data difference degree is less than or equal to a first threshold, adding the second network element to the first collaboration set; or
when a computing power value indicated by the first computing power information is greater than a second threshold, adding the second network element to the first collaboration set; or
when the data difference degree is less than or equal to a first threshold and a computing power value indicated by the first computing power information is greater than a second threshold, adding the second network element to the first collaboration set.

In an implementation of this application, a possible specific implementation of determining the first collaboration set is provided. Specifically, the first network element performs determining based on at least one of the data difference degree and the first computing power information. The first network element determines the first collaboration set when at least one of the data difference degree and the first computing power information meets a specific condition. Specifically, the first network element may determine whether to add the second network element to the first collaboration set. Because the data difference degree represents the difference between the data in the second network element and the data in the at least one third network element, when the data difference degree is less than or equal to the first threshold, it represents that the difference between the data in the second network element and the data in the at least one third network element is small, and the data in the second network element is suitable for federated learning. In this case, the first network element determines to add the second network element to the first collaboration set. On the contrary, when the data difference degree is greater than the first threshold, it represents that the difference between the data in the second network element and the data in the at least one third network element is large, and the data in the second network element is not suitable for federated learning. In this case, the first network element determines not to add the second network element to the first collaboration set. Because the first computing power information represents a strength of the computing power of the second network element for performing data feature measurement on the first data corresponding to the first service, when the computing power value indicated by the first computing power information is greater than the second threshold, it represents that the computing power of the second network element for performing data feature measurement on the first data corresponding to the first service is strong, and the computing power of the second network element is suitable for federated learning. In this case, the first network element determines to add the second network element to the first collaboration set. On the contrary, when the computing power value indicated by the first computing power information is less than or equal to the second threshold, it represents that the computing power of the second network element for performing data feature measurement on the first data corresponding to the first service is weak, and the computing power of the second network element is not suitable for federated learning. In this case, the first network element determines not to add the second network element to the first collaboration set. According to this embodiment of this application, the first network element determines the first collaboration set based on at least one of the data difference degree and the first computing power information that are of each data supply network element and a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

In a possible implementation, the determining, based on the second information, a first collaboration set used to perform the first service includes:

clustering the second network element and at least one fourth network element based on the gradient information corresponding to the second network element and gradient information corresponding to the at least one fourth network element, to obtain at least two clusters, where each of the at least two clusters includes at least one network element; and determining, based on the at least two clusters, the first collaboration set used to perform the first service.

In an implementation of this application, a possible specific implementation of determining the first collaboration set is provided. Specifically, the first network element clusters data supply network elements based on the gradient information corresponding to the data supply network elements, to obtain at least two clusters, where each of the at least two clusters includes at least one network element; and determines, based on the at least two clusters, the first collaboration set used to perform the first service. For example, the first network element clusters the data supply network elements (including the second network element and the at least one fourth network element) based on the gradient information corresponding to the second network element and the gradient information corresponding to the at least one fourth network element, to obtain the at least two clusters, and determines, based on the at least two clusters, the first collaboration set used to perform the first service. According to this embodiment of this application, the first network element may cluster the data supply network elements based on the gradient information corresponding to the data supply network elements, to obtain a needed feature topology relationship obtained through clustering, and determine the first collaboration set based on a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

In a possible implementation, the at least two clusters meet the following relationship:
distribution of corresponding data in each of the at least two clusters meets a non-independent and identically distributed relationship, and distribution of corresponding data between the at least two clusters meets an independent and identically distributed relationship.

In an implementation of this application, a possible specific implementation of the at least two clusters is provided. Specifically, distribution of corresponding data in each of the at least two clusters meets a non-independent and identically distributed relationship, and distribution of corresponding data between the at least two clusters meets an independent and identically distributed relationship. Because data in data supply network elements is in a non-independent and identically distributed relationship, a model for training the data in the data supply network elements is difficult to converge, and invalid training may increase energy consumption, waste transmission resources, and reduce collaboration efficiency. According to this embodiment of this application, the at least two clusters obtained by clustering the data supply network elements based on the gradient information corresponding to the data supply network elements meet the feature topology relationship needed for training. In other words, data in corresponding data supply network elements in clusters may comply with the original non-independent and identically distributed relationship, and data in corresponding data supply network elements between the clusters may comply with the independent and identically distributed relationship, so that a model for training distribution of corresponding data between the clusters converges more effectively. In this way, invalid training can be avoided, energy consumption and transmission resources are reduced, the collaboration efficiency of the network element is improved, and the network AI performance is further improved.

In a possible implementation, the at least two clusters include the second network element, and a computing power value indicated by the first computing power information corresponding to the second network element is greater than a third threshold.

In an implementation of this application, a possible specific implementation of the at least two clusters is provided. Specifically, the at least two clusters include the second network element, and the computing power value indicated by the first computing power information corresponding to the second network element is greater than the third threshold. Because the first computing power information represents a strength of the computing power of the second network element for performing data feature measurement on the first data corresponding to the first service, when the computing power value indicated by the first computing power information is greater than the third threshold, it represents that the computing power of the second network element for performing data feature measurement on the first data corresponding to the first service is strong, and the computing power of the second network element is suitable for training. In this case, the first network element determines to cluster the second network element, where the obtained at least two clusters include the second network element. On the contrary, when the computing power value indicated by the first computing power information is less than or equal to the third threshold, it represents that the computing power of the second network element for performing data feature measurement on the first data corresponding to the first service is weak, and the computing power of the second network element is not suitable for training. In this case, the first network element determines not to cluster the second network element, where the obtained at least two clusters do not include the second network element. According to this embodiment of this application, the first network element performs clustering based on the first computing power information corresponding to the data supply network elements to obtain the at least two clusters, where the at least two clusters meet a computing power needed for training and meet the feature topology relationship needed for training; and determines the first collaboration set based on a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

According to a second aspect, an embodiment of this application provides a data feature measurement method. The method includes:

A second network element receives first information from a first network element, where the first information includes information about a first service for which the first network element performs collaborative training, and the first information is used to request the second network element to perform data feature measurement on first data corresponding to the first service;
the second network element performs data feature measurement on the first data, to obtain first feature information; and
the second network element sends second information to the first network element, where the second information includes the first feature information, the second information is used to determine a first collaboration set, and the first collaboration set is used to perform the first service.

In this embodiment of this application, the data feature measurement method is provided. The second network element receives the first information from the first network element, performs data feature measurement on the first data based on the first information, to obtain first feature information, and sends the second information to the first network element. The first information includes the information about the first service for which the first network element performs collaborative training. The first information is used to request the second network element to perform data feature measurement on the first data corresponding to the first service. The second information includes the first feature information obtained by performing data feature measurement on the first data corresponding to the first service by the second network element. The second information is used by the first network element to determine the first collaboration set used to perform the first service. According to this embodiment of this application, the second network element may receive the first information, perform data feature measurement on the first data corresponding to the first service, and send the second information to the first network element, so that the first network element can obtain a data feature of a data supply network element, and can determine the first collaboration set based on a requirement of the first service for which the first network element performs collaborative training, where the determined first collaboration set is used to perform the first service. This can improve collaboration efficiency of the network element, avoid invalid training, reduce energy consumption and transmission resources, and further improve network AI performance.

In a possible implementation, the first information further includes at least one of the following: information about a first measurement model and information about a first measurement parameter. The first information is used to request the second network element to perform data feature measurement on the first data based on at least one of the first measurement model and the first measurement parameter.

In an implementation of this application, a possible specific implementation of the first information is provided. Specifically, the first information may include at least one of the information about the first measurement model and the information about the first measurement parameter. In this case, the first information is used to request to perform, based on at least one of the information about the first measurement model and the information about the first measurement parameter, data feature measurement on the first data corresponding to the first service. Correspondingly, the second network element may perform data feature measurement on the first data based on at least one of the information about the first measurement model and the information about the first measurement parameter, to obtain the first feature information. According to this embodiment of this application, the second network element may perform, based on a plurality of different types of content included in the first information, data feature measurement on the first data corresponding to the first service, to obtain the first feature information. The first feature information may be used to assist the first network element in determining the first collaboration set used to perform the first service, to improve the collaboration efficiency of the network element and further improve the network AI performance.

In a possible implementation, the first feature information includes gradient information corresponding to the second network element.

In an implementation of this application, a possible specific implementation of the first feature information is provided. Specifically, the first feature information includes the gradient information corresponding to the second network element, and the second network element includes at least one data supply network element that performs data feature measurement on the first data corresponding to the first service. According to this embodiment of this application, the first feature information obtained by performing data feature measurement by the second network element includes the gradient information corresponding to the second network element. The gradient information may be used to assist the first network element in determining the first collaboration set used to perform the first service, to improve the collaboration efficiency of the network element and further improve the network AI performance.

In a possible implementation, the second information further includes first computing power information, and the first computing power information includes information about a computing power of the second network element for measuring the first data.

In an implementation of this application, a possible specific implementation of the second information is provided. Specifically, the second information further includes the first computing power information, the first computing power information includes the information about the computing power of the second network element for performing data feature measurement on the first data corresponding to the first service, and the second network element includes at least one data supply network element that performs data feature measurement on the first data corresponding to the first service. According to this embodiment of this application, the second information fed back by the second network element to the first network element includes the information about the computing power of the second network element for performing data feature measurement on the first data corresponding to the first service. The information about the computing power may be used to assist the first network element in determining the first collaboration set used to perform the first service, to improve the collaboration efficiency of the network element and further improve the network AI performance.

In a possible implementation, that the second information is used to determine the first collaboration set includes:

The gradient information corresponding to the second network element and gradient information corresponding to at least one third network element are used to determine a data difference degree, and at least one of the data difference degree and the first computing power information is used to determine the first collaboration set, where the data difference degree represents a difference between the first data in the second network element and data in the at least one third network element, and the data in the at least one third network element includes data that corresponds to the first service and that is in the at least one third network element.

In an implementation of this application, a possible specific implementation in which the second information is used to determine the first collaboration set is provided. Specifically, a data difference degree corresponding to each data supply network element may be obtained based on gradient information corresponding to each data supply network element, and at least one of the data difference degree and the first computing power information that correspond to each data supply network element may be used by the first network element to determine the first collaboration set used to perform the first service. For example, the data difference degree corresponding to the second network element may be obtained based on the gradient information corresponding to the second network element and the gradient information corresponding to the at least one third network element, and at least one of the data difference degree and the first computing power information that correspond to the second network element may be used by the first network element to determine the first collaboration set used to perform the first service. According to this embodiment of this application, the first network element may obtain the data difference degree and the first computing power information that are of each data supply network element, and determine the first collaboration set based on at least one of the data difference degree and the first computing power information that are of each data supply network element and a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

In a possible implementation, the data difference degree includes:

$$\mathrm{DG} = \frac{\sum_{j=1}^{N}|\nabla\_j|^2 + |\nabla\_local|^2}{\left|\sum_{j=1}^{N}\nabla\_j + \nabla\_local\right|^2},$$

where

DG is the data difference degree, $\nabla\_local$ is the gradient information corresponding to the second network element, $\nabla\_j$ includes the gradient information corresponding to the at least one third network element, and N is a quantity of third network elements.

In an implementation of this application, a possible specific implementation of the data difference degree is provided. Specifically, the first feature information includes the gradient information corresponding to each data supply network element, for example, includes the gradient information of the second network element and the gradient information of the at least one third network element. A formula method for calculating the data difference degree corresponding to the gradient information of the second network element and the gradient information of the at least one third network element is provided based on the gradient information of the second network element and the gradient information of the at least one third network element. According to this embodiment of this application, the data difference degree may be calculated based on the foregoing formula and the gradient information of the second network element and the gradient information of the at least one third network element, so that the difference between the data in the second network element and the data in the at least one third network element can be accurately measured, to determine the first collaboration set used to perform the first service.

In a possible implementation, that at least one of the data difference degree and the first computing power information is used to determine the first collaboration set includes:

When the data difference degree is less than or equal to a first threshold, the first collaboration set includes the second network element; or

when a computing power value indicated by the first computing power information is greater than a second threshold, the first collaboration set includes the second network element; or

when the data difference degree is less than or equal to a first threshold and a computing power value indicated by the first computing power information is greater than a second threshold, the first collaboration set includes the second network element.

In an implementation of this application, a possible specific implementation in which at least one of the data difference degree and the first computing power information is used to determine the first collaboration set is provided. Specifically, at least one of the data difference degree and the first computing power information may be used to determine whether a condition is met. When at least one of the data difference degree and the first computing power information meets the condition, the first collaboration set is determined. Specifically, at least one of the data difference degree and the first computing power information may be used to determine whether to add the second network element to the first collaboration set. Because the data difference degree represents the difference between the data in the second network element and the data in the at least one third network element, when the data difference degree is less than or equal to the first threshold, it represents that the difference between the data in the second network element and the data in the at least one third network element is small, and the data in the second network element is suitable for federated learning. In this case, the first network element determines to add the second network element to the first collaboration set. On the contrary, when the data difference degree is greater than the first threshold, it represents that the difference between the data in the second network element and the data in the at least one third network element is large, and the data in the second network element is not suitable for federated learning. In this case, the first network element determines not to add the second network element to the first collaboration set. Because the first computing power information represents a strength of the computing power of the second network element for performing data feature measurement on the first data corresponding to the first service, when the computing power value indicated by the first computing power information is greater than the second threshold, it represents that the computing power of the second network element for performing data feature measurement on the first data corresponding to the first service is strong, and the computing power of the second network element is suitable for federated learning. In this case, the first network element determines to add the second network element to the first collaboration set. On the contrary, when the computing power value indicated by the first computing power information is less than or equal to the second threshold, it represents that the computing power of the second network element for performing data feature measurement on the first data corresponding to the first service is weak, and the computing power of the second network element is not suitable for federated learning. In this case, the first network element determines not to add the second network element to the first collaboration set. According to this embodiment of this application, the first network element determines the first collaboration set based on at least one of the data difference degree and the first computing power information that are of each data supply network element and a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

In a possible implementation, that the second information is used to determine the first collaboration set includes:

The gradient information corresponding to the second network element and gradient information corresponding to at least one fourth network element are used to determine at least two clusters, each of the at least two clusters includes at least one network element, and the at least two clusters are used to determine the first collaboration set.

In an implementation of this application, a possible specific implementation in which the second information is used to determine the first collaboration set is provided. Specifically, gradient information corresponding to data supply network elements may be used to cluster the data supply network elements, to obtain at least two clusters, where each of the at least two clusters includes at least one network element; and the at least two clusters may be used to determine the first collaboration set used to perform the first service. For example, the gradient information corresponding to the second network element and the gradient information corresponding to the at least one fourth network element may be used to cluster the data supply network elements (including the second network element and the at least one fourth network element), to obtain the at least two clusters, and the at least two clusters may be used to determine the first collaboration set used to perform the first service. According to this embodiment of this application, the first network element may cluster the data supply network elements based on the gradient information corresponding to the data supply network elements, to obtain a needed feature topology relationship obtained through clustering, and determine the first collaboration set based on a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

In a possible implementation, the at least two clusters meet the following relationship:
distribution of corresponding data in each of the at least two clusters meets a non-independent and identically distributed relationship, and distribution of corresponding data between the at least two clusters meets an independent and identically distributed relationship.

In an implementation of this application, a possible specific implementation of the at least two clusters is provided. Specifically, distribution of corresponding data in each of the at least two clusters meets a non-independent and identically distributed relationship, and distribution of corresponding data between the at least two clusters meets an independent and identically distributed relationship. Because data in data supply network elements is in a non-independent and identically distributed relationship, a model for training the data in the data supply network elements is difficult to converge, and invalid training may increase energy consumption, waste transmission resources, and reduce collaboration efficiency. According to this embodiment of this application, the at least two clusters obtained by clustering the data supply network elements based on the gradient information corresponding to the data supply network elements meet the feature topology relationship needed for training. In other words, data in corresponding data supply network elements in clusters may comply with the original non-independent and identically distributed relationship, and data in corresponding data supply network elements between the clusters may comply with the independent and identically distributed relationship, so that a model for training distribution of corresponding data between the clusters converges more effectively. In this way, invalid training can be avoided, energy consumption and transmission resources are reduced, the collaboration efficiency of the network element is improved, and the network AI performance is further improved.

In a possible implementation, the at least two clusters include the second network element, and a computing power value indicated by the first computing power information corresponding to the second network element is greater than a third threshold.

In an implementation of this application, a possible specific implementation of the at least two clusters is provided. Specifically, the at least two clusters include the second network element, and the computing power value indicated by the first computing power information corresponding to the second network element is greater than the third threshold. Because the first computing power information represents a strength of the computing power of the second network element for performing data feature measurement on the first data corresponding to the first service, when the computing power value indicated by the first computing power information is greater than the third threshold, it represents that the computing power of the second network element for performing data feature measurement on the first data corresponding to the first service is strong, and the computing power of the second network element is suitable for training. In this case, the first network element determines to cluster the second network element, where the obtained at least two clusters include the second network element. On the contrary, when the computing power value indicated by the first computing power information is less than or equal to the third threshold, it represents that the computing power of the second network element for performing data feature measurement on the first data corresponding to the first service is weak, and the computing power of the second network element is not suitable for training. In this case, the first network element determines not to cluster the second network element, where the obtained at least two clusters do not include the second network element. According to this embodiment of this application, the first network element performs clustering based on the first computing power information corresponding to the data supply network elements to obtain the at least two clusters, where the at least two clusters meet a computing power needed for training and meet the feature topology relationship needed for training; and determines the first collaboration set based on a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

According to a third aspect, an embodiment of this application provides a communication apparatus. The apparatus includes a module or a unit configured to perform the method according to either of the first aspect and the second aspect.

In a possible design, the apparatus includes:

a transceiver unit, configured to send first information, where the first information includes information about a first service for which the communication apparatus performs collaborative training, and the first information is used to request to perform data feature measurement on first data corresponding to the first service, where
the transceiver unit is further configured to receive second information, where the second information includes first feature information obtained by performing data feature measurement on the first data; and

a processing unit, configured to determine, based on the second information, a first collaboration set used to perform the first service.

In a possible implementation, the first information further includes at least one of the following: information about a first measurement model and information about a first measurement parameter. The first information is used to request to perform data feature measurement on the first data based on at least one of the first measurement model and the first measurement parameter.

In a possible implementation, the first feature information includes gradient information corresponding to a second network element, and the second network element includes a network element that performs data feature measurement on the first data.

In a possible implementation, the second information further includes first computing power information, and the first computing power information includes information about a computing power of the second network element for measuring the first data.

In a possible implementation, the processing unit is specifically configured to obtain a data difference degree based on the gradient information corresponding to the second network element and gradient information corresponding to at least one third network element, where the data difference degree represents a difference between the first data in the second network element and data in the at least one third network element, and the data in the at least one third network element includes data that corresponds to the first service and that is in the at least one third network element; and

the processing unit is specifically configured to determine, based on at least one of the data difference degree and the first computing power information, the first collaboration set used to perform the first service.

In a possible implementation, the data difference degree includes:

$$DG = \frac{\sum_{j=1}^{N} |\nabla\_j|^2 + |\nabla\_local|^2}{\left|\sum_{j=1}^{N} \nabla\_j + \nabla\_local\right|^2},$$

where

DG is the data difference degree, $\nabla\_local$ is the gradient information corresponding to the second network element, $\nabla\_j$ includes the gradient information corresponding to the at least one third network element, and N is a quantity of third network elements.

In a possible implementation, the processing unit is further configured to: when the data difference degree is less than or equal to a first threshold, add the second network element to the first collaboration set; or

the processing unit is further configured to: when a computing power value indicated by the first computing power information is greater than a second threshold, add the second network element to the first collaboration set; or

the processing unit is further configured to: when the data difference degree is less than or equal to a first threshold and a computing power value indicated by the first computing power information is greater than a second threshold, add the second network element to the first collaboration set.

In a possible implementation, the processing unit is specifically configured to cluster the second network element and at least one fourth network element based on the gradient information corresponding to the second network element and gradient information corresponding to the at least one fourth network element, to obtain at least two clusters, where each of the at least two clusters includes at least one network element; and

the processing unit is further specifically configured to determine, based on the at least two clusters, the first collaboration set used to perform the first service.

In a possible implementation, the at least two clusters meet the following relationship:

distribution of corresponding data in each of the at least two clusters meets a non-independent and identically distributed relationship, and distribution of corresponding data between the at least two clusters meets an independent and identically distributed relationship.

In a possible implementation, the at least two clusters include the second network element, and a computing power value indicated by the first computing power information corresponding to the second network element is greater than a third threshold.

For technical effects brought by the third aspect and any possible implementation, refer to the descriptions of the technical effects corresponding to the first aspect and the corresponding implementations.

In another possible design, the apparatus includes:

a transceiver unit, configured to receive first information from a first network element, where the first information includes information about a first service for which the first network element performs collaborative training, and the first information is used to request the communication apparatus to perform data feature measurement on first data corresponding to the first service; and

a processing unit, configured to perform data feature measurement on the first data, to obtain first feature information, where

the transceiver unit is further configured to send second information to the first network element, where the second information includes the first feature information, the second information is used to determine a first collaboration set, and the first collaboration set is used to perform the first service.

In a possible implementation, the first information further includes at least one of the following: information about a first measurement model and information about a first measurement parameter. The first information is used to request the communication apparatus to perform data feature measurement on the first data based on at least one of the first measurement model and the first measurement parameter.

In a possible implementation, the first feature information includes gradient information corresponding to the communication apparatus.

In a possible implementation, the second information further includes first computing power information, and the first computing power information includes information about a computing power of the communication apparatus for measuring the first data.

In a possible implementation, that the second information is used to determine the first collaboration set includes:

The gradient information corresponding to the communication apparatus and gradient information corresponding to at least one third network element are used to determine a data difference degree, and at least one of the data difference degree and the first computing power information is used to determine the first collaboration set.

The data difference degree represents a difference between the first data in the communication apparatus and data in the at least one third network element, and the data in the at least one third network element includes data that corresponds to the first service and that is in the at least one third network element.

In a possible implementation, the data difference degree includes:

$$DG = \frac{\sum_{j=1}^{N} |\nabla\_j|^2 + |\nabla\_local|^2}{\left|\sum_{j=1}^{N} \nabla\_j + \nabla\_local\right|^2},$$

where
DG is the data difference degree, $\nabla\_local$ is the gradient information corresponding to the communication apparatus, $\nabla\_j$ includes the gradient information corresponding to the at least one third network element, and N is a quantity of third network elements.

In a possible implementation, that at least one of the data difference degree and the first computing power information is used to determine the first collaboration set includes:

When the data difference degree is less than or equal to a first threshold, the first collaboration set includes the communication apparatus; or
when a computing power value indicated by the first computing power information is greater than a second threshold, the first collaboration set includes the communication apparatus; or
when the data difference degree is less than or equal to a first threshold and a computing power value indicated by the first computing power information is greater than a second threshold, the first collaboration set includes the communication apparatus.

In a possible implementation, that the second information is used to determine the first collaboration set includes:
The gradient information corresponding to the communication apparatus and gradient information corresponding to at least one fourth network element are used to determine at least two clusters, each of the at least two clusters includes at least one network element, and the at least two clusters are used to determine the first collaboration set.

In a possible implementation, the at least two clusters meet the following relationship:
distribution of corresponding data in each of the at least two clusters meets a non-independent and identically distributed relationship, and distribution of corresponding data between the at least two clusters meets an independent and identically distributed relationship.

In a possible implementation, the at least two clusters include the communication apparatus, and a computing power value indicated by the first computing power information corresponding to the communication apparatus is greater than a third threshold.

For technical effects brought by the third aspect and any possible implementation, refer to the descriptions of the technical effects corresponding to the second aspect and the corresponding implementations.

According to a fourth aspect, an embodiment of this application provides a communication apparatus. The communication apparatus includes a processor. The processor is coupled to a memory, and may be configured to execute instructions in the memory, to implement the method in either of the first aspect and the second aspect and any one of the possible implementations. Optionally, the communication apparatus further includes the memory. Optionally, the communication apparatus further includes a communication interface, and the processor is coupled to the communication interface.

According to a fifth aspect, an embodiment of this application provides a communication apparatus. The communication apparatus includes a logic circuit and a communication interface. The communication interface is configured to receive information or send information. The logic circuit is configured to receive information or send information through the communication interface, so that the communication apparatus performs the method in any one of the first aspect and the second aspect and any possible implementation of the first aspect and the second aspect.

According to a sixth aspect, an embodiment of this application provides a computer-readable storage medium. The computer-readable storage medium is configured to store a computer program (which may also be referred to as code or instructions). When the computer program is run on a computer, the method in any one of the first aspect and the second aspect and any possible implementation of the first aspect and the second aspect is implemented.

According to a seventh aspect, an embodiment of this application provides a computer program product. The computer program product includes: a computer program (which may also be referred to as code or instructions). When the computer program is run, a computer is enabled to perform the method in any one of the first aspect and the second aspect and any possible implementation of the first aspect and the second aspect.

According to an eighth aspect, an embodiment of this application provides a chip. The chip includes a processor. The processor is configured to execute instructions. When the processor executes the instructions, the chip is enabled to perform the method in any one of the first aspect and the second aspect and any possible implementation of the first aspect and the second aspect. Optionally, the chip further includes a communication interface, and the communication interface is configured to receive a signal or send a signal.

According to a ninth aspect, an embodiment of this application provides a communication system. The communication system includes at least one of the following: the communication apparatus according to the third aspect, the communication apparatus according to the fourth aspect, and the communication apparatus according to the fifth aspect.

According to a tenth aspect, an embodiment of this application provides a communication system. The communication system includes a first network element and a second network element. The first network element is configured to perform the method in any one of the first aspect and any possible implementation of the first aspect, and the second network element is configured to perform the method in any one of the second aspect and any possible implementation of the second aspect.

In addition, in a process of performing the method in any one of the first aspect and the second aspect and any possible implementation of the first aspect and the second aspect, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method in any one of the first aspect and the second aspect and any possible implementation of the first aspect and the second aspect, the processor may be a processor specially configured to perform the method, or may be a processor, for example, a general-purpose processor, that performs the method by executing computer instructions in a memory. The memory may be a non-transitory (non-transitory) memory such as a read-only memory (Read-Only Memory, ROM). The memory and the processor may be integrated on a same chip, or may be separately disposed on different chips. A type of the memory and a manner of disposing the memory and the processor are not limited in embodiments of this application.

In a possible implementation, the at least one memory is located outside an apparatus.

In another possible implementation, the at least one memory is located in an apparatus.

In another possible implementation, some memories in the at least one memory are located in an apparatus, and the other memories are located outside the apparatus.

In this application, the processor and the memory may alternatively be integrated into one device. In other words, the processor and the memory may alternatively be integrated together.

According to this embodiment of this application, a collaboration requirement network element obtains a data feature of each data supply network element by sending first information and receiving second information, so that a first collaboration set can be determined based on a requirement of a first service for which the collaboration requirement network element performs collaborative training, where the determined first collaboration set is used to perform the first service. This can improve collaboration efficiency of the network element, avoid invalid training, reduce energy consumption and transmission resources, and further improve network AI performance.

## BRIEF DESCRIPTION OF DRAWINGS

To describe technical solutions in embodiments of this application more clearly, the following briefly describes accompanying drawings required for describing embodiments of this application. Apparently, the accompanying drawings in the following description show merely some embodiments of this application, and a person of ordinary skill in the art may derive other drawings from these accompanying drawings without creative efforts.

FIG. 1 is a diagram of a communication system according to an embodiment of this application;
FIG. 2 is a diagram of a data feature according to an embodiment of this application;
FIG. 3 is a schematic flowchart of a data feature measurement method according to an embodiment of this application;
FIG. 4 is a schematic flowchart of another data feature measurement method according to an embodiment of this application;
FIG. 5 is a schematic flowchart of still another data feature measurement method according to an embodiment of this application;
FIG. 6 is a diagram of a structure of a communication apparatus according to an embodiment of this application;
FIG. 7 is a diagram of a structure of a communication apparatus according to an embodiment of this application; and
FIG. 8 is a diagram of a structure of a chip according to an embodiment of this application.

## DESCRIPTION OF EMBODIMENTS

To make objectives, the technical solutions, and advantages of this application clearer, the following describes embodiments of this application with reference to the accompanying drawings in embodiments of this application.

Terms "first", "second", and the like in the specification, claims, and accompanying drawings of this application are merely used to distinguish between different objects, but are not used to describe a specific order. In addition, terms such as "include" and "have" and any other variants thereof are intended to cover a non-exclusive inclusion. For example, processes, methods, systems, products, devices, or the like that include a series of steps or units are not limited to listed steps or units, but optionally further includes other unlisted steps or units, or optionally further includes other inherent steps or units of the processes, the methods, the products, the devices, or the like.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. A person skilled in the art may explicitly and implicitly understand that in various embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

It should be understood that in this application, "at least one (item)" means one or more, "a plurality of" means two or more, and "at least two (items)" means two or three or more. "And/or" is used to describe an association relationship between associated objects, and indicates that three relationships may exist. For example, "A and/or B" may indicate: only A exists, only B exists, and both A and B exist. A and B may be singular or plural. The character "/" usually indicates an "or" relationship between the associated objects. "At least one of the following" or a similar expression thereof indicates any combination of the following, including any combination of one or more of the following. For example, at least one of a, b, or c may indicate a, b, c, "a and b", "a and c", "b and c", or "a, b, and c", where a, b, and c may be singular or plural.

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th-generation (5th-generation, 5G) communication system, and a new communication system (for example, 6G) emerging in future communication development.

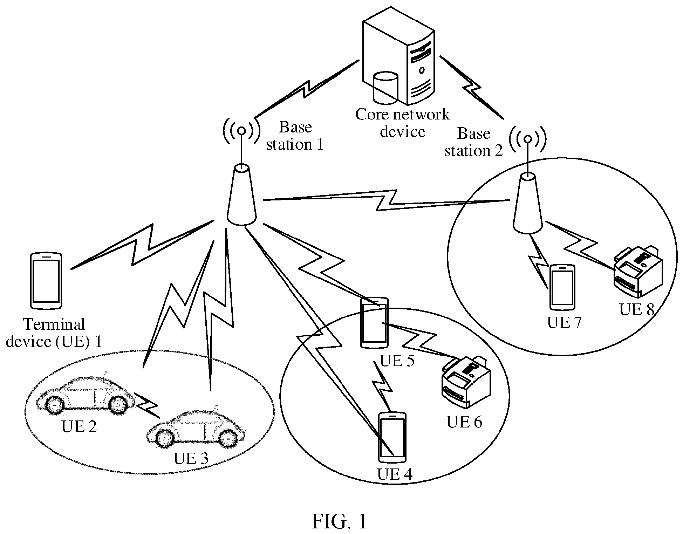

The technical solutions provided in this application may be further applied to machine type communication (machine type communication, MTC), long term evolution-machine type communication (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-everything (vehicle-to-everything, V2X, where X may represent everything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like. For example, in FIG. 1 shown below, a terminal device may communicate with a terminal device by using a D2D technology, an M2M technology, a V2X technology, or the like.

FIG. 1 is a diagram of a communication system according to an embodiment of this application.

As shown in FIG. 1, the communication system may include at least one access network device and at least one terminal device.

The access network device and the terminal device are separately described as follows.

For example, the access network device may be a next generation NodeB (next generation NodeB, gNB), a next generation evolved NodeB (next generation evolved NodeB, ng-eNB), or an access network device in future 6G communication. The access network device may be any device having a wireless transceiver function, and includes but is not limited to the base station shown above. The base station may alternatively be a base station in a future communication system such as a 6th generation communication system Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may alternatively be a small cell, a transmission reception point (transmission reception point, TRP) (which may also be referred to as a transmission point), or the like. It may be understood that the access network device may alternatively be a base station or the like in a future evolved public land mobile network (public land mobile network, PLMN).

In some deployments, the base station (for example, the gNB) may include a central unit (central unit, CU) and a distributed unit (distributed unit, DU). To be specific, functions of a base station in an access network are divided, some functions of the base station are deployed on a CU, and remaining functions are deployed on a DU. In addition, a plurality of DUs share one CU, so that costs can be reduced, and network expansion can be prone to implement. In some other deployments of the base station, the CU may be further divided into a CU-control plane (control plane, CP), a CU-user plane (user plane, UP), and the like. In still some other deployments of the base station, the base station may alternatively be an open radio access network (open radio access network, ORAN) architecture or the like. A specific type of the base station is not limited in this application.

For ease of description, the following describes the method in this application by using an example in which the access network device is a base station.

For example, the terminal device may also be referred to as a user equipment (user equipment, UE) or a terminal. The terminal device is a device having a wireless transceiver function. The terminal device may be deployed on land, and includes an indoor device, an outdoor device, a handheld device, a wearable device, or a vehicle-mounted device. The terminal device may alternatively be deployed on the water, for example, on a ship. The terminal device may alternatively be deployed in the air, for example, deployed on an airplane, a balloon, or a satellite. The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. It may be understood that the terminal device may alternatively be a terminal device in a future 6G network, a terminal device in a future evolved PLMN, or the like.

It may be understood that the terminal device shown in this application may not only include a vehicle (for example, an entire vehicle) in the internet of vehicles, but also include a vehicle-mounted device, a vehicle-mounted terminal, or the like in the internet of vehicles. A specific form of the terminal device when the terminal device is used in the internet of vehicles is not limited in this application.

For ease of description, the following describes the method in this application by using an example in which the terminal device is a UE.

As shown in FIG. 1, the communication system may further include at least one core network device. The core network device is described as follows.

For example, the core network device includes services such as user access control, mobility management, session management, user security authentication, and charging. The core network includes a plurality of functional units, and may be divided into a control plane functional entity and a data plane functional entity. An access and mobility management unit (access and mobility management function, AMF) is responsible for user access management, security authentication, and mobility management. A location management unit (location management function, LMF) is responsible for managing and controlling a location service request of a target terminal, and processing location related information. A user plane unit (user plane function, UPF) is responsible for managing functions such as user plane data transmission and traffic statistics collection.

The communication system shown in FIG. 1 includes one core network device, two base stations, and eight UEs, for example, a core network device, a base station 1, a base station 2, and a UE 1 to a UE 8 in FIG. 1. In the communication system, the base station 1 may send a downlink signal such as configuration information or downlink control information (downlink control information, DCI) to the UE 1 to the UE 6, and the UE 1 to the UE 6 may send uplink signals such as SRSs or physical uplink shared channels (physical uplink shared channels, PUSCHs) to the base station 1. The base station 1 may further send a downlink signal to the UE 7 and the UE 8 through the base station 2, and the UE 7 and the UE 8 may send uplink signals to the base station 1 through the base station 2. The base station 2 may send a downlink signal such as configuration information or DCI to the UE 7 and the UE 8, and the UE 7 and the UE 8 may send uplink signals such as SRSs or PUSCHs to the base station 2. It may be understood that, for a manner of communication between the UEs, refer to the foregoing descriptions. Details are not described herein.

It should be understood that FIG. 1 shows an example of one core network device, two base stations, eight UEs, and communication links between communication devices. Optionally, the communication system may include a plurality of base stations, and a coverage area of each base station may include another quantity of UEs, for example, more or fewer UEs. This is not limited in this application.

A plurality of antennas may be configured for the foregoing communication devices, for example, the core network device, the base station 1, the base station 2, and the UE 1 to the UE 8 in FIG. 1. The plurality of antennas may include at least one transmit antenna configured to send a signal, at least one receive antenna configured to receive a signal, and the like. A specific structure of each communication device is not limited in embodiments of this application. Optionally, the communication system may further include another network entity such as a network controller or a mobility management entity. This is not limited in embodiments of this application.

It may be understood that the diagram of the communication system shown in FIG. 1 is merely an example. For a diagram of a communication system in another form, refer to a related standard or protocol. Details are not described herein.

Embodiments shown below are applicable to the communication system shown in FIG. 1, or are applicable to the communication system in another form. Details are not described below again.

This application provides a data feature measurement method. The method is applied to the field of communication technologies. Before the method in this application is described in detail, to describe the solutions of this application more clearly, the following first describes some knowledge related to data feature measurement.

Federated learning is essentially a distributed machine learning framework. The federated learning implements data sharing and joint modeling while ensuring data privacy security and legal compliance. A core idea of the federated learning is that when a plurality of data sources jointly participate in model training, without original data transferring, model joint training is performed only by exchanging an intermediate parameter of a model, and original data may remain local. In this way, balance between data privacy protection and data sharing and analysis is achieved, that is, a data application mode in which "data is available but invisible" is implemented.

That data is independent and identically distributed (independent and identically distributed, IID) means that probability distribution of each variable in a group of random variables is the same, and the random variables are independent of each other. That the group of random variables is independent and identically distributed does not mean that a probability of occurrence of each event in sample space of the group of random variables is the same. For example, a result sequence obtained by throwing a non-uniform dice is independent and identically distributed, but a probability of throwing each face upward is different.

As future communication scenarios become complex, service requirements become diversified, and service experience becomes personalized, it is urgent to introduce artificial intelligence (artificial intelligence, AI) into a communication network. Accordingly, a network data analytics function (network data analytics function, NWDAF) is proposed to support the AI in the communication network. The NWDAF is a data perception and analysis network element, performs automatic perception and analysis on a network based on network data, and participates in a full lifecycle of the network: planning, construction, maintenance, optimization, and operation. This facilitates network maintenance and control and improves network resource utilization.

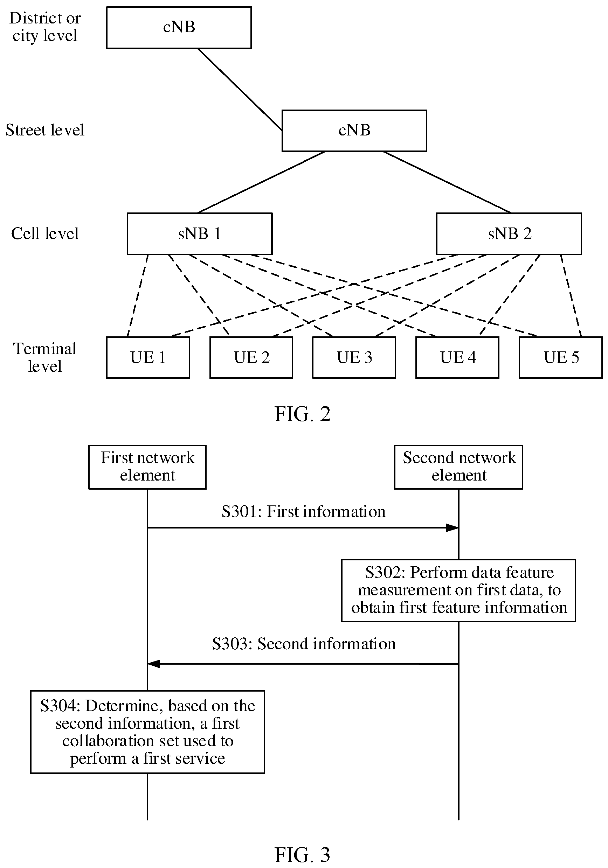

Currently, there are a plurality of levels of network elements in the communication network, and network elements at different levels have different data resources. For details, refer to FIG. 2. FIG. 2 is a diagram of a data feature according to an embodiment of this application.

As shown in FIG. 2, a plurality of levels of network elements are included, for example, a terminal-level network element, a cell-level network element, a street-level network element, and a district or city-level network element. The terminal-level network element includes but is not limited to a UE 1 to a UE 5, the cell-level network element includes but is not limited to an sNB 1 and an sNB 2, the street-level network element includes but is not limited to a cNB, and the district or city-level network element includes but is not limited to an xCN. Data features in network elements at different levels are different. For example, data in the terminal-level network element (the UE 1 to the UE 5) has a single-point feature, and data in the cell-level network element (the sNB 1 and the sNB 2) has an area feature.

It may be understood that FIG. 2 is merely an example for describing a case in which data in network elements at different levels has different data features, and should constitute no limitation on this embodiment of this application.

It can be learned from FIG. 2 that in a data perception and analysis process, because a data resource of a single network element is limited, network AI performance cannot be fully utilized. Therefore, data of a plurality of network elements in the network is usually used to perform collaboration between the plurality of network elements, to improve the network AI performance. However, currently, collaboration efficiency between the plurality of network elements is low, resulting in low network AI performance.

For the technical problem that the collaboration efficiency between the plurality of network elements is low in the collaboration process of the plurality of network elements, resulting in low network AI performance, in this embodiment of this application, a data feature measurement method is provided. A collaboration requirement network element obtains a data feature of each data supply network element by sending first information and receiving second information, so that a first collaboration set can be determined based on a requirement of a first service for which the collaboration requirement network element performs collaborative training, where the determined first collaboration set is used to perform the first service. This can improve collaboration efficiency of the network element, avoid invalid training, reduce energy consumption and transmission resources, and further improve the network AI performance.

It should be understood that a network element (net element, NE) mentioned in this application, for example, a first network element, a second network element, a third network element, or a fourth network element, may be simply understood as an element in a network, and is a minimum unit that can be monitored and managed in network management. The network element may be a set that includes one or more chassis or subracks and that can independently complete a transmission function. Details are not described below.

FIG. 3 is a schematic flowchart of a data feature measurement method according to an embodiment of this application. The data feature measurement method is applied to the field of communication technologies, and the data feature measurement method includes but is not limited to the following steps.

S301: A first network element sends first information to a second network element, and correspondingly, the second network element receives the first information sent by the first network element.

The first information includes information about a first service for which the first network element performs collaborative training, and the first information is used to request the second network element to perform data feature measurement on first data corresponding to the first service.

Optionally, the first service may be a service type used to describe current collaborative training.

Different events correspond to different datasets. Therefore, the first network element needs to specify, in the first information, that data feature measurement is performed on a dataset corresponding to a specific event. The event may be of a pre-defined standardized type, for example, load balance (load balance, LB) or energy saving (energy saving, ES), or may be a description manner of a dataset. This is not limited in this embodiment of this application. The load balance is application of a clustering (Clustering) technology, and refers to balancing load (work tasks) and sharing the load to a plurality of operation units for running, to improve a concurrent processing capability. The energy saving refers to balancing load (work tasks) and sharing the load to a plurality of operation units for running, to achieve an energy saving effect.

It may be understood that the first network element in this embodiment of this application is a collaboration requirement network element, and the second network element in this embodiment of this application is a data supply network element. Details are not described below.

It may be understood that there may be one or more data supply network elements corresponding to the collaboration requirement network element. This is not limited in this embodiment of this application.

It may be understood that the first network element in this embodiment of this application is a device equipped with a processor that may be configured to execute computer-executable instructions, and may be an access network device such as a base station or a transmission point TRP, or may be a core network device. Specifically, the first network element may be the access network device (including but not limited to any one of the base station 1 and the base station 2) in FIG. 1, and is configured to perform the data feature measurement method in this embodiment of this application. A collaboration set is obtained by measuring a data feature of a network element, to improve collaboration efficiency of the network element and further improve network AI performance.

It may be understood that the second network element in this embodiment of this application is a device equipped with a processor that may be configured to execute computer-executable instructions, and may be a terminal device such as a handheld terminal (a mobile phone, a tablet computer, or the like) or a vehicle-mounted terminal (a wireless terminal in self driving or the like). Specifically, the second network element may be the terminal device (including but not limited to any one of the UE 1 to the UE 8) in FIG. 1, and is configured to perform the data feature measurement method in this embodiment of this application. A collaboration set is obtained by measuring a data feature of a network element, to improve the collaboration efficiency of the network element and further improve the network AI performance.

In a possible implementation, the first information includes at least one of the following:
information about a first measurement model; or information about a first measurement parameter.

The first measurement model is a reference measurement model customized for an event described in the first service, and is used to measure a data feature of a dataset corresponding to the event. The data feature is used to describe distribution of a group of data. For example, for independent and identically distributed data samples, convergence can be accelerated during horizontal federated learning.

It may be understood that the first reference model is not a model that is finally used. The first reference model aims to measure a data feature of a dataset. Therefore, the first reference model needs to be designed with two features: a small size and generalization. The small size means that the data feature of the dataset can be obtained with minimum computing and communication overheads. The generalization means that a basic data feature of the dataset is extracted by the first reference model, and application to training of various specific AI models can be implemented.

Optionally, the first measurement model corresponding to each event may be determined in advance, and may be specifically preconfigured by the first network element, or may be specified in a protocol. In this case, the information about the first measurement model in the first information may be default.

Optionally, the first measurement model corresponding to each event may be delivered to the second network element via the first information. In this case, the information about the first measurement model in the first information cannot be left blank.

Optionally, the first measurement model corresponding to each event may alternatively be delivered to the second network element via information other than the first information. This is not limited in this embodiment of this application.

The first measurement parameter is a parameter configured for measuring the dataset corresponding to the event described in the first service, and is used to measure the data feature of the dataset corresponding to the event. The data feature is used to describe distribution of a group of data. For example, for independent and identically distributed data samples, convergence can be accelerated during horizontal federated learning.

Optionally, the first measurement parameter includes a quantity of epochs in current training. An epoch represents a training process in which a dataset is sent to a network model and forward calculation and back propagation are completed for the dataset once. A value of an epoch is related to a degree of diversification of a dataset. A larger degree of diversification of a dataset indicates a larger corresponding epoch.

Optionally, the first measurement parameter corresponding to each event may be determined in advance, and may be specifically preconfigured by the first network element, or may be specified in a protocol. In this case, the information about the first measurement parameter in the first information may be default.

Optionally, the first measurement parameter corresponding to each event may be delivered to the second network element via the first information. In this case, the information about the first measurement parameter in the first information cannot be left blank.

Optionally, the first measurement parameter corresponding to each event may alternatively be delivered to the second network element via information other than the first information. This is not limited in this embodiment of this application.

In this embodiment of this application, the first information is used to request the second network element to perform, based on at least one of the information about the first measurement model and the information about the first measurement parameter, data feature measurement on the first data corresponding to the first service. Correspondingly, the second network element may perform, based on the at least one of the information about the first measurement model and the information about the first measurement parameter, data feature measurement on the first data, to obtain first feature information.

According to this embodiment of this application, the second network element (each data supply network element) may perform, based on a plurality of different types of content included in the first information, data feature measurement on the first data corresponding to the first service, to obtain the first feature information. The first feature information may be used to assist the first network element (the collaboration requirement network element) in determining a first collaboration set used to perform the first service, to improve the collaboration efficiency of the network element and further improve the network AI performance.

In a possible embodiment, the second network element may specifically receive the first information from the first network element in the following several manners.

**Manner 1**: The first network element sends a broadcast message, and correspondingly, the second network element receives the broadcast message sent by the first network element. The broadcast message includes a message indicating the first information. The broadcast message may include the first information, or the broadcast message may include information such as an index or an identifier. The information such as the index or the identifier may indicate the first information. The second network element receives the first information from the first network element by receiving the broadcast message sent by the first network element.

**Manner 2**: The first network element sends the first information to the second network element based on a collaboration requirement of the first network element, to request the second network element to perform data feature measurement on the first data corresponding to the first service. The second network element receives the first information from the first network element in a unicast manner.

It may be understood that the methods for receiving the first information from the first network element in the foregoing manner 1 and manner 2 are merely used as examples of two methods for obtaining the first information by the second network element, and should constitute no limitation on this embodiment of this application. Alternatively, the first information may be obtained through exchange of other properly transformed information. This is not limited in this embodiment of this application.

According to this embodiment of this application, the second network element may obtain the first information from the first network element in a plurality of manners, to perform, based on the first information, data feature measurement on the first data corresponding to the first service.

S302: The second network element performs data feature measurement on the first data, to obtain the first feature information.

It can be learned from step S301 that the first information includes the information about the first service for which the first network element performs collaborative training, and the first information is used to request the second network element to perform data feature measurement on the first data corresponding to the first service.

Correspondingly, after receiving the first information from the first network element, the second network element performs, based on the first information, data feature measurement on the first data corresponding to the first service, to obtain the first feature information.

In a possible embodiment, it can be learned from step S301 that the first information includes at least one of the information about the first measurement model and the information about the first measurement parameter.

Correspondingly, after receiving the first information from the first network element, the second network element performs, based on at least one of the information about the first measurement model and the information about the first measurement parameter, data feature measurement on the first data corresponding to the first service, to obtain the first feature information.

In a possible embodiment, the first feature information includes gradient information corresponding to the second network element.

According to this embodiment of this application, the first feature information obtained by performing data feature measurement by the second network element (each data supply network element) includes the gradient information corresponding to the second network element (each data supply network element). The gradient information may be used to assist the first network element in determining the first collaboration set used to perform the first service, to improve the collaboration efficiency of the network element and further improve the network AI performance.

S303: The second network element sends second information to the first network element, and correspondingly, the first network element receives the second information sent by the second network element.

The second information includes the first feature information obtained by performing data feature measurement on the first data corresponding to the first service.

In a possible embodiment, it can be learned from step S302 that the first feature information includes the gradient information corresponding to the second network element.

According to this embodiment of this application, the first feature information obtained by performing data feature measurement by the second network element (each data supply network element) includes the gradient information corresponding to the second network element (each data supply network element). The gradient information may be used to assist the first network element in determining the first collaboration set used to perform the first service, to improve the collaboration efficiency of the network element and further improve the network AI performance.

In a possible embodiment, the second information further includes first computing power information.

The first computing power information includes information about a computing power of the second network element (each data supply network element) for performing data feature measurement on the first data corresponding to the first service.

According to this embodiment of this application, the second information fed back by the second network element (each data supply network element) to the first network element includes the information about the computing power of the second network element (each data supply network element) for performing data feature measurement on the first data corresponding to the first service. The information about the computing power may be used to assist the first network element in determining the first collaboration set used to perform the first service, to improve the collaboration efficiency of the network element and further improve the network AI performance.

S304: The first network element determines, based on the second information, the first collaboration set used to perform the first service.

It can be learned from step S303 that the second information includes at least one of the gradient information corresponding to the second network element and the first computing power information corresponding to the second network element.

In different application scenarios, the first service describes different events, including but not limited to collaborative training in scenarios such as federated learning and network element clustering. The first network element may determine, based on the at least one of the gradient information corresponding to the second network element and the first computing power information corresponding to the second network element, the first collaboration set used to perform the first service in different application scenarios.

In a possible embodiment, the first network element obtains, based on the gradient information corresponding to each data supply network element, a data difference degree corresponding to each data supply network element, and determines, based on at least one of the data difference degree and the first computing power information that correspond to each data supply network element, the first collaboration set used to perform the first service.

For example, the first network element obtains, based on the gradient information corresponding to the second network element and gradient information corresponding to at least one third network element, a data difference degree corresponding to the second network element, and determines, based on at least one of the data difference degree and the first computing power information that correspond to the second network element, the first collaboration set used to perform the first service.

**Step 1:** The first network element obtains, based on the gradient information corresponding to the second network element and the gradient information corresponding to the at least one third network element, the data difference degree corresponding to the second network element. An implementation is as follows.

The gradient information corresponding to the second network element includes a gradient norm corresponding to the second network element and a gradient corresponding to the second network element. The gradient information corresponding to the at least one third network element includes a sum of gradient norms corresponding to the at least one third network element and a sum of gradients corresponding to the at least one third network element. The first network element obtains the data difference degree through calculation based on the gradient norm corresponding to the second network element, the gradient corresponding to the second network element, the sum of the gradient norms corresponding to the at least one third network element, and the sum of the gradients corresponding to the at least one third network element. The data difference degree represents a difference between data in the second network element and data in the at least one third network element.

Optionally, the method for obtaining the data difference degree may be further implemented by using the following formula:

$$\mathrm{DG} = \frac{\sum_{j=1}^{N} |\nabla\_j|^2 + |\nabla\_local|^2}{\left|\sum_{j=1}^{N} \nabla\_j + \nabla\_local\right|^2}$$

DG is the data difference degree, $\nabla\_local$ is the gradient information corresponding to the second network element, $\nabla\_j$ includes the gradient information corresponding to the at least one third network element, and N is a quantity of third network elements.

It may be understood that the method for obtaining the data difference degree by using the formula is merely used as an example of the method for obtaining the data difference degree corresponding to the second network element based on the gradient information corresponding to the second network element and the gradient information corresponding to the at least one third network element, and should constitute no limitation on this embodiment of this application. Alternatively, the data difference degree may be obtained by using another properly transformed formula. This is not limited in this embodiment of this application.

According to this embodiment of this application, the data difference degree may be calculated based on the foregoing formula and the gradient information of the second network element and the gradient information of the at least one third network element, so that the difference between the data in the second network element and the data in the at least one third network element can be accurately measured, to determine the first collaboration set used to perform the first service.

**Step 2:** The first network element determines, based on at least one of the data difference degree and the first computing power information that correspond to the second network element, the first collaboration set used to perform the first service. An implementation is as follows.

The first network element performs determining based on at least one of the data difference degree and the first computing power information. The first network element determines the first collaboration set when at least one of the data difference degree and the first computing power information meets a specific condition. Specifically, the first network element may determine whether to add the second network element to the first collaboration set.

Optionally, the following provides three possible specific implementations.

**Manner 1:** When the data difference degree is less than or equal to a first threshold, the first network element determines to add the second network element to the first collaboration set; or when the data difference degree is greater than a first threshold, the first network element determines not to add the second network element to the first collaboration set.

It may be understood that, alternatively, when the data difference degree is less than a first threshold, the first network element determines to add the second network element to the first collaboration set; or when the data difference degree is greater than or equal to a first threshold, the first network element determines not to add the second network element to the first collaboration set. Alternatively, whether to add the second network element to the first collaboration set may be determined by using another properly transformed method for comparing the data difference degree with the first threshold. This is not limited in this embodiment of this application.

**Manner 2:** When a computing power value indicated by the first computing power information is greater than a second threshold, the first network element determines to add the second network element to the first collaboration set; or when a computing power value indicated by the first computing power information is less than or equal to a second threshold, the first network element determines not to add the second network element to the first collaboration set.

It may be understood that, alternatively, when a computing power value indicated by the first computing power information is greater than or equal to a second threshold, the first network element determines to add the second network element to the first collaboration set; or when a computing power value indicated by the first computing power information is less than a second threshold, the first network element determines not to add the second network element to the first collaboration set. Alternatively, whether to add the second network element to the first collaboration set may be determined by using another properly transformed method for comparing the computing power value with the second threshold. This is not limited in this embodiment of this application.

**Manner 3:** When the data difference degree is less than or equal to a first threshold and a computing power value indicated by the first computing power information is greater than a second threshold, the first network element determines to add the second network element to the first collaboration set; or when the data difference degree is greater than a first threshold and a computing power value indicated by the first computing power information is less than or equal to a second threshold, the first network element determines not to add the second network element to the first collaboration set.

It may be understood that, alternatively, when the data difference degree is less than a first threshold and a computing power value indicated by the first computing power information is greater than or equal to a second threshold, the first network element determines to add the second network element to the first collaboration set; or when the data difference degree is greater than or equal to a first threshold and a computing power value indicated by the first computing power information is less than a second threshold, the first network element determines not to add the second network element to the first collaboration set. Alternatively, whether to add the second network element to the first collaboration set may be determined by using another properly transformed method for comparing the data difference degree with the first threshold and comparing the computing power value with the second threshold. This is not limited in this embodiment of this application.

It may be understood that because the data difference degree represents the difference between the data in the second network element and the data in the at least one third network element, when the data difference degree is less than or equal to the first threshold, it represents that the difference between the data in the second network element and the data in the at least one third network element is small, and the data in the second network element is suitable for federated learning. In this case, the first network element determines to add the second network element to the first collaboration set. On the contrary, when the data difference degree is greater than the first threshold, it represents that the difference between the data in the second network element and the data in the at least one third network element is large, and the data in the second network element is not suitable for federated learning. In this case, the first network element determines not to add the second network element to the first collaboration set.

It may be understood that because the first computing power information represents a strength of the computing power of the second network element for performing data feature measurement on the first data corresponding to the first service, when the computing power value indicated by the first computing power information is greater than the second threshold, it represents that the computing power of the second network element for performing data feature measurement on the first data corresponding to the first service is strong, and the computing power of the second network element is suitable for federated learning. In this case, the first network element determines to add the second network element to the first collaboration set. On the contrary, when the computing power value indicated by the first computing power information is less than or equal to the second threshold, it represents that the computing power of the second network element for performing data feature measurement on the first data corresponding to the first service is weak, and the computing power of the second network element is not suitable for federated learning. In this case, the first network element determines not to add the second network element to the first collaboration set.

It may be understood that the first threshold and the second threshold may be values preconfigured by the first network element, and may be adaptively adjusted based on different service types. According to this embodiment of this application, the first network element may select a proper first threshold and a proper second threshold, to measure the data difference degree and the computing power value, so as to determine whether to add the second network element to the first collaboration set.

It may be understood that the first network element in this embodiment of this application is a collaboration requirement network element, and the second network element and the third network element in this embodiment of this application are data supply network elements.

According to this embodiment of this application, the first network element may obtain the data difference degree and the first computing power information that are of each data supply network element, and determine the first collaboration set based on at least one of the data difference degree and the first computing power information that are of each data supply network element and a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

In a possible embodiment, the first network element clusters data supply network elements based on gradient information corresponding to the data supply network elements, to obtain at least two clusters, where each of the at least two clusters includes at least one network element, and determines, based on the at least two clusters, the first collaboration set used to perform the first service.

For example, the first network element clusters the data supply network elements (including the second network element and at least one fourth network element) based on the gradient information corresponding to the second network element and gradient information corresponding to the at least one fourth network element, to obtain at least two clusters, and determines, based on the at least two clusters, the first collaboration set used to perform the first service.

In a possible embodiment, distribution of corresponding data in each of the at least two clusters meets a non-independent and identically distributed relationship, and distribution of corresponding data between the at least two clusters meets an independent and identically distributed relationship.

Because data in data supply network elements is in a non-independent and identically distributed relationship, a model for training the data in the data supply network elements is difficult to converge, and invalid training may increase energy consumption, waste transmission resources, and reduce collaboration efficiency.

According to this embodiment of this application, the at least two clusters obtained by clustering the data supply network elements based on the gradient information corresponding to the data supply network elements meet a feature topology relationship needed for training. In other words, data in corresponding data supply network elements in clusters may comply with the original non-independent and identically distributed relationship, and data in corresponding data supply network elements between the clusters may comply with the independent and identically distributed relationship, so that a model for training distribution of corresponding data between the clusters converges more effectively. In this way, invalid training can be avoided, energy consumption and transmission resources are reduced, the collaboration efficiency of the network element is improved, and the network AI performance is further improved.

In a possible embodiment, a computing power value indicated by first computing power information corresponding to a network element in each of the at least two clusters is greater than a preset threshold. For example, the at least two clusters include the second network element, and a computing power value indicated by the first computing power information corresponding to the second network element is greater than a third threshold, or the computing power value indicated by the first computing power information corresponding to the second network element is greater than or equal to the third threshold.

It may be understood that the third threshold may be a value preconfigured by the first network element, and may be adaptively adjusted based on different service types. According to this embodiment of this application, the first network element may select a proper third threshold, to measure the computing power value, so as to determine whether to cluster the second network element.

Because the first computing power information represents a strength of the computing power of the second network element for performing data feature measurement on the first data corresponding to the first service, when the computing power value indicated by the first computing power information is greater than the third threshold, it represents that the computing power of the second network element for performing data feature measurement on the first data corresponding to the first service is strong, and the computing power of the second network element is suitable for training. In this case, the first network element determines to cluster the second network element, where the obtained at least two clusters include the second network element. On the contrary, when the computing power value indicated by the first computing power information is less than or equal to the third threshold, it represents that the computing power of the second network element for performing data feature measurement on the first data corresponding to the first service is weak, and the computing power of the second network element is not suitable for training. In this case, the first network element determines not to cluster the second network element, where the obtained at least two clusters do not include the second network element.

According to this embodiment of this application, the first network element performs clustering based on the first computing power information corresponding to the data supply network elements to obtain the at least two clusters, where the at least two clusters meet a computing power needed for training and meet the feature topology relationship needed for training; and determines the first collaboration set based on a requirement of the first service for which the first network element performs collaborative training, where the determined first collaboration set is used to perform the first service. This can improve collaboration efficiency of the network element, avoid invalid training, reduce energy consumption and transmission resources, and further improve network AI performance.

According to this embodiment of this application, the first network element may obtain a data feature of each data supply network element by sending the first information and receiving the second information, so that the first collaboration set can be determined based on a requirement of the first service for which the first network element performs collaborative training, where the determined first collaboration set is used to perform the first service. This can improve the collaboration efficiency of the network element, avoid invalid training, reduce energy consumption and transmission resources, and further improve the network AI performance.

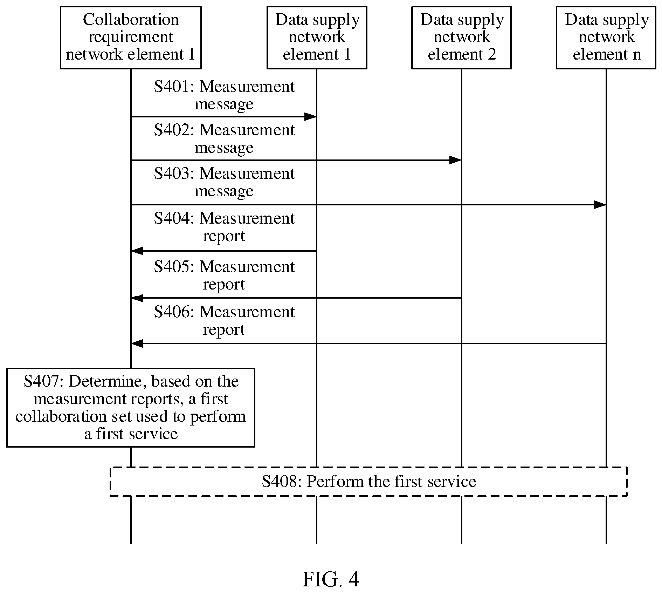

FIG. 4 is a schematic flowchart of another data feature measurement method according to an embodiment of this application. It may be understood that step S401 to step S403 in this embodiment of this application may be considered as a proper variation or supplement to step S301 in FIG. 3, step S404 to step S406 in this embodiment of this application may be considered as a proper variation or supplement to step S303 in FIG. 3, and step S407 and step S408 in this embodiment of this application may be considered as a proper variation or supplement to step S304 in FIG. 3. Alternatively, it may be understood that the data feature measurement method in this embodiment of this application may also be considered as an embodiment that can be independently performed. This is not limited in this application. The data feature measurement method according to this embodiment of this application is applied to the field of communication technologies, and the data feature measurement method includes but is not limited to the following steps.

S401: A collaboration requirement network element 1 sends a measurement message to a data supply network element 1, and correspondingly, the data supply network element 1 receives the measurement message sent by the collaboration requirement network element 1.

S402: The collaboration requirement network element 1 sends a measurement message to a data supply network element 2, and correspondingly, the data supply network element 2 receives the measurement message sent by the collaboration requirement network element 1.

S403: The collaboration requirement network element 1 sends a measurement message to a data supply network element n, and correspondingly, the data supply network element n receives the measurement message sent by the collaboration requirement network element 1.

Step S401 to step S403 are described as follows.

For the collaboration requirement network element 1, refer to the descriptions of the first network element in step S301, and the collaboration requirement network element 1 may be understood as a specific example of the first network element. Details are not described herein again.

For the data supply network element 1, the data supply network element 2, and the data supply network element n, refer to the descriptions of the second network element in step S301, and the data supply network element 1, the data supply network element 2, and the data supply network element n may be understood as a specific example of the second network element. Details are not described herein again.

The measurement message includes information about a first service for which the collaboration requirement network element 1 performs collaborative training, and the measurement message is used to request data supply network elements (including but not limited to the data supply network element 1, the data supply network element 2, and the data supply network element n) to perform data feature measurement on first data corresponding to the first service. Specifically, for the measurement message, refer to the first information in step S301, and the measurement message may be understood as a specific example of the first information. Details are not described herein again.

It may be understood that the collaboration requirement network element 1 in this embodiment of this application is a device equipped with a processor that may be configured to execute computer-executable instructions, and may be an access network device such as a base station or a transmission point TRP, or may be a core network device. Specifically, the first network element may be the access network device (including but not limited to any one of the base station 1 and the base station 2) in FIG. 1, and is configured to perform the data feature measurement method in this embodiment of this application. A collaboration set is obtained by measuring a data feature of a network element, to improve collaboration efficiency of the network element and further improve network AI performance.

It may be understood that the data supply network element 1, the data supply network element 2, and the data supply network element n in this embodiment of this application are devices equipped with processors that may be configured to execute computer-executable instructions, and may be terminal devices such as handheld terminals (mobile phones, tablet computers, or the like) or vehicle-mounted terminals (wireless terminals in self driving or the like). Specifically, the data supply network element 1, the data supply network element 2, and the data supply network element n may be the terminal devices (including but not limited to any one of the UE 1 to the UE 8) in FIG. 1, and are configured to perform the data feature measurement method in this embodiment of this application. A collaboration set is obtained by measuring a data feature of a network element, to improve the collaboration efficiency of the network element and further improve the network AI performance.

In a possible embodiment, the collaboration requirement network element 1 may specifically send the measurement message to each data supply network element in the following several manners.

**Manner 1:** The collaboration requirement network element 1 sends a broadcast message, and correspondingly, each data supply network element (including but not limited to the data supply network element 1, the data supply network element 2, and the data supply network element n) receives the broadcast message sent by the collaboration requirement network element 1. The broadcast message includes a message indicating the measurement message. The broadcast message may include the measurement message, or the broadcast message may include information such as an index or an identifier. The information such as the index or the identifier may indicate the measurement message.

Each data supply network element (including but not limited to the data supply network element 1, the data supply network element 2, and the data supply network element n) receives the measurement message from the collaboration requirement network element 1 by receiving the broadcast message sent by the collaboration requirement network element 1.

It may be understood that step S401 to step S403 in the manner 1 may be combined into one step.

**Manner 2:** The collaboration requirement network element 1 sends the measurement message to each data supply network element (including but not limited to the data supply network element 1, the data supply network element 2, and the data supply network element n) based on a collaboration requirement of the collaboration requirement network element 1, to request each data supply network element (including but not limited to the data supply network element 1, the data supply network element 2, and the data supply network element n) to perform data feature measurement on the first data corresponding to the first service.

Each data supply network element (including but not limited to the data supply network element 1, the data supply network element 2, and the data supply network element n) receives the measurement message from the collaboration requirement network element 1 in a unicast manner.

It may be understood that step S401 to step S403 in the manner 2 are not performed in a sequence.

It may be understood that the methods for receiving the measurement message from the collaboration requirement network element 1 in the foregoing manner 1 and manner 2 are merely used as examples of two methods for obtaining the measurement message by each data supply network element, and should constitute no limitation on this embodiment of this application. Alternatively, the measurement message may be obtained through exchange of other properly transformed information. This is not limited in this embodiment of this application.

According to this embodiment of this application, each data supply network element may obtain the measurement message from the collaboration requirement network element 1 in a plurality of manners, to perform, based on the measurement message, data feature measurement on the first data corresponding to the first service.

S404: The data supply network element 1 sends a measurement report to the collaboration requirement network element 1, and correspondingly, the collaboration requirement network element 1 receives the measurement report sent by the data supply network element 1.

S405: The data supply network element 2 sends a measurement report to the collaboration requirement network element 1, and correspondingly, the collaboration requirement network element 1 receives the measurement report sent by the data supply network element 2.

S406: The data supply network element n sends a measurement report to the collaboration requirement network element 1, and correspondingly, the collaboration requirement network element 1 receives the measurement report sent by the data supply network element n.

Step S404 to step S406 are described as follows.

In a possible embodiment, the measurement report includes first feature information obtained by performing data feature measurement on the first data corresponding to the first service by each data supply network element.

In a possible embodiment, the measurement report further includes information about a computing power of each data supply network element for performing data feature measurement on the first data corresponding to the first service.

Specifically, for the measurement report, refer to the second information in step S303, and the measurement report may be understood as a specific example of the second information. Details are not described herein again.

According to this embodiment of this application, the measurement report fed back by each data supply network element (including but not limited to the data supply network element 1, the data supply network element 2, and the data supply network element n) to the collaboration requirement network element 1 includes at least one of the first feature information obtained by performing data feature measurement on the first data corresponding to the first service by each data supply network element (including but not limited to the data supply network element 1, the data supply network element 2, and the data supply network element n) and the information about the computing power of each data supply network element for performing data feature measurement on the first data corresponding to the first service. The measurement report may be used to assist the collaboration requirement network element 1 in determining a first collaboration set used to perform the first service, to improve the collaboration efficiency of the network element and further improve the network AI performance.

S407: The collaboration requirement network element 1 determines, based on the measurement reports, the first collaboration set used to perform the first service.

It can be learned from step S404 to step S406 that the measurement report includes the at least one of the first feature information obtained by performing data feature measurement on the first data corresponding to the first service by each data supply network element (including but not limited to the data supply network element 1, the data supply network element 2, and the data supply network element n) and the information about the computing power of each data supply network element for performing data feature measurement on the first data corresponding to the first service.

The collaboration requirement network element 1 may determine, based on at least one of gradient information corresponding to each data supply network element (including but not limited to the data supply network element 1, the data supply network element 2, and the data supply network element n) and first computing power information corresponding to each data supply network element (including but not limited to the data supply network element 1, the data supply network element 2, and the data supply network element n), the first collaboration set used to perform the first service in a federated learning application scenario.

In a possible embodiment, when a data difference degree corresponding to a data supply network element is less than or equal to a first threshold, the collaboration requirement network element determines to add the data supply network element to the first collaboration set; or when a data difference degree corresponding to a data supply network element is greater than a first threshold, the collaboration requirement network element determines not to add the data supply network element to the first collaboration set.

It may be understood that alternatively, when a data difference degree corresponding to a data supply network element is less than a first threshold, the collaboration requirement network element determines to add the data supply network element to the first collaboration set; or when a data difference degree corresponding to a data supply network element is greater than or equal to a first threshold, the collaboration requirement network element determines not to add the data supply network element to the first collaboration set. Alternatively, whether to add the data supply network element to the first collaboration set may be determined by using another properly transformed method for comparing the data difference degree with the first threshold. This is not limited in this embodiment of this application.

In a possible embodiment, when a computing power value indicated by first computing power information corresponding to a data supply network element is greater than a second threshold, the collaboration requirement network element determines to add the data supply network element to the first collaboration set; or when a computing power value indicated by a first computing power information corresponding to a data supply network element is less than or equal to a second threshold, the collaboration requirement network element determines not to add the data supply network element to the first collaboration set.

It may be understood that alternatively, when a computing power value indicated by first computing power information corresponding to a data supply network element is greater than or equal to a second threshold, the collaboration requirement network element determines to add the data supply network element to the first collaboration set; or when a computing power value indicated by a first computing power information corresponding to a data supply network element is less than a second threshold, the collaboration requirement network element determines not to add the data supply network element to the first collaboration set. Alternatively, whether to add the data supply network element to the first collaboration set may be determined by using another properly transformed method for comparing the computing power value with the second threshold. This is not limited in this embodiment of this application.

In a possible embodiment, when a data difference degree corresponding to a data supply network element is less than or equal to a first threshold and a computing power value indicated by first computing power information corresponding to the data supply network element is greater than a second threshold, the collaboration requirement network element determines to add the data supply network element to the first collaboration set; or when a data difference degree corresponding to a data supply network element is greater than a first threshold and a computing power value indicated by a first computing power information corresponding to the data supply network element is less than or equal to a second threshold, the collaboration requirement network element determines not to add the data supply network element to the first collaboration set.

It may be understood that alternatively, when a data difference degree corresponding to a data supply network element is less than a first threshold and a computing power value indicated by first computing power information corresponding to the data supply network element is greater than or equal to a second threshold, the collaboration requirement network element determines to add the data supply network element to the first collaboration set; or when a data difference degree corresponding to a data supply network element is greater than or equal to a first threshold and a computing power value indicated by a first computing power information corresponding to the data supply network element is less than a second threshold, the collaboration requirement network element determines not to add the data supply network element to the first collaboration set. Alternatively, whether to add the data supply network element to the first collaboration set may be determined by using another properly transformed method for comparing the data difference degree with the first threshold and comparing the computing power value with the second threshold. This is not limited in this embodiment of this application.

Specifically, for a case in which the collaboration requirement network element 1 determines, based on the measurement report, the first collaboration set used to perform the first service in the federated learning application scenario, refer to the descriptions in step S304, and that the collaboration requirement network element 1 determines, based on the measurement report, the first collaboration set used to perform the first service in the federated learning application scenario in step S407 may be understood as a specific example in which the first network element determines, based on the second information, the first collaboration set used to perform the first service in step S304. Details are not described herein again.

S408: Perform the first service.

It can be learned from step S407 that the determined first collaboration set includes one or more data supply network elements of the data supply network elements (including but not limited to the data supply network element 1, the data supply network element 2, and the data supply network element n). Correspondingly, a collaboration network element in the first collaboration set performs the first service.

According to this embodiment of this application, the collaboration requirement network element 1 may obtain the data difference degree and the first computing power information that correspond to each data supply network element, and determine the first collaboration set based on at least one of the data difference degree and the first computing power information that correspond to each data supply network element and a requirement of the first service for which the collaboration requirement network element 1 performs collaborative training, where the determined first collaboration set is used to perform the first service. This can improve collaboration efficiency of the network element, avoid invalid training, reduce energy consumption and transmission resources, and further improve network AI performance.

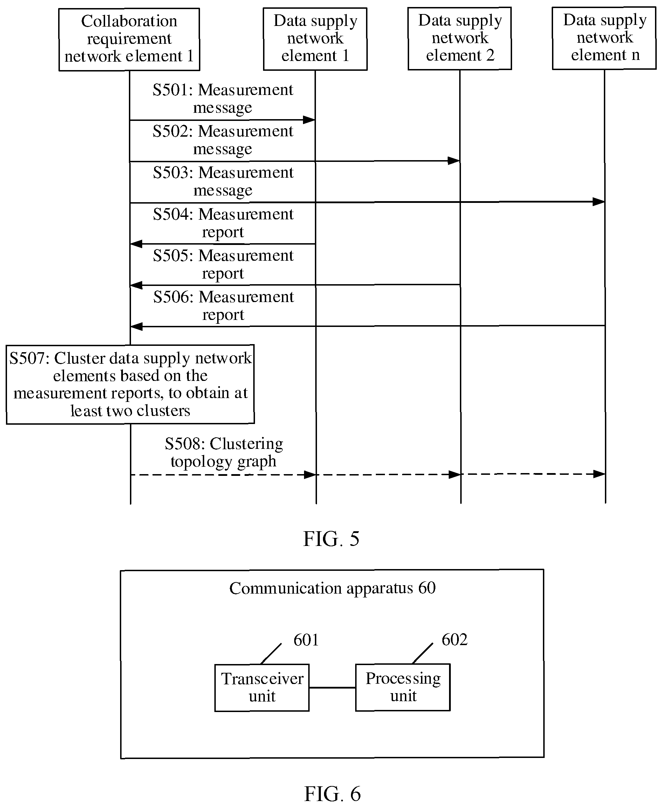

FIG. 5 is a schematic flowchart of still another data feature measurement method according to an embodiment of this application. It may be understood that step S501 to step S503 in this embodiment of this application may be considered as a proper variation or supplement to step S301 in FIG. 3, step S504 to step S506 in this embodiment of this application may be considered as a proper variation or supplement to step S303 in FIG. 3, and step S507 and step S408 in this embodiment of this application may be considered as a proper variation or supplement to step S304 in FIG. 3. Alternatively, it may be understood that the data feature measurement method in this embodiment of this application may also be considered as an embodiment that can be independently performed. This is not limited in this application. The data feature measurement method according to this embodiment of this application is applied to the field of communication technologies, and the data feature measurement method includes but is not limited to the following steps.

S501: A collaboration requirement network element 1 sends a measurement message to a data supply network element 1, and correspondingly, the data supply network element 1 receives the measurement message sent by the collaboration requirement network element 1.

S502: The collaboration requirement network element 1 sends a measurement message to a data supply network element 2, and correspondingly, the data supply network element 2 receives the measurement message sent by the collaboration requirement network element 1.

S503: The collaboration requirement network element 1 sends a measurement message to a data supply network element n, and correspondingly, the data supply network element n receives the measurement message sent by the collaboration requirement network element 1.

Step S501 to step S503 are described as follows.

For the collaboration requirement network element 1, refer to the descriptions of the first network element in step S301, and the collaboration requirement network element 1 may be understood as a specific example of the first network element. Details are not described herein again.

For the data supply network element 1, the data supply network element 2, and the data supply network element n, refer to the descriptions of the second network element in step S301, and the data supply network element 1, the data supply network element 2, and the data supply network element n may be understood as a specific example of the second network element. Details are not described herein again.

The measurement message includes information about a first service for which the collaboration requirement network element 1 performs collaborative training, and the measurement message is used to request data supply network elements (including but not limited to the data supply network element 1, the data supply network element 2, and the data supply network element n) to perform data feature measurement on first data corresponding to the first service. Specifically, for the measurement message, refer to the first information in step S301, and the measurement message may be understood as a specific example of the first information. Details are not described herein again.

It may be understood that the collaboration requirement network element 1 in this embodiment of this application is a device equipped with a processor that may be configured to execute computer-executable instructions, and may be an access network device such as a base station or a transmission point TRP, or may be a core network device. Specifically, the first network element may be the access network device (including but not limited to any one of the base station 1 and the base station 2) in FIG. 1, and is configured to perform the data feature measurement method in this embodiment of this application. A collaboration set is obtained by measuring a data feature of a network element, to improve collaboration efficiency of the network element and further improve network AI performance.

It may be understood that the data supply network element 1, the data supply network element 2, and the data supply network element n in this embodiment of this application are devices equipped with processors that may be configured to execute computer-executable instructions, and may be terminal devices such as handheld terminals (mobile phones, tablet computers, or the like) or vehicle-mounted terminals (wireless terminals in self driving or the like). Specifically, the data supply network element 1, the data supply network element 2, and the data supply network element n may be the terminal devices (including but not limited to any one of the UE 1 to the UE 8) in FIG. 1, and are configured to perform the data feature measurement method in this embodiment of this application. A collaboration set is obtained by measuring a data feature of a network element, to improve the collaboration efficiency of the network element and further improve the network AI performance.

In a possible embodiment, the collaboration requirement network element 1 may specifically send the measurement message to each data supply network element in the following several manners.

**Manner 1:** The collaboration requirement network element 1 sends a broadcast message, and correspondingly, each data supply network element (including but not limited to the data supply network element 1, the data supply network element 2, and the data supply network element n) receives the broadcast message sent by the collaboration requirement network element 1. The broadcast message includes a message indicating the measurement message. The broadcast message may include the measurement message, or the broadcast message may include information such as an index or an identifier. The information such as the index or the identifier may indicate the measurement message.

Each data supply network element (including but not limited to the data supply network element 1, the data supply network element 2, and the data supply network element n) receives the measurement message from the collaboration requirement network element 1 by receiving the broadcast message sent by the collaboration requirement network element 1.

It may be understood that step S501 to step S503 in the manner 1 may be combined into one step.

**Manner 2:** The collaboration requirement network element 1 sends the measurement message to each data supply network element (including but not limited to the data supply network element 1, the data supply network element 2, and the data supply network element n) based on a collaboration requirement of the collaboration requirement network element 1, to request each data supply network element (including but not limited to the data supply network element 1, the data supply network element 2, and the data supply network element n) to perform data feature measurement on the first data corresponding to the first service.

Each data supply network element (including but not limited to the data supply network element 1, the data supply network element 2, and the data supply network element n) receives the measurement message from the collaboration requirement network element 1 in a unicast manner.

It may be understood that step S501 to step S503 in the manner 2 are not performed in a sequence.

It may be understood that the methods for receiving the measurement message from the collaboration requirement network element 1 in the foregoing manner 1 and manner 2 are merely used as examples of two methods for obtaining the measurement message by each data supply network element, and should constitute no limitation on this embodiment of this application. Alternatively, the measurement message may be obtained through exchange of other properly transformed information. This is not limited in this embodiment of this application.

According to this embodiment of this application, each data supply network element may obtain the measurement message from the collaboration requirement network element 1 in a plurality of manners, to perform, based on the measurement message, data feature measurement on the first data corresponding to the first service.

S504: The data supply network element 1 sends a measurement report to the collaboration requirement network element 1, and correspondingly, the collaboration requirement network element 1 receives the measurement report sent by the data supply network element 1.

S505: The data supply network element 2 sends a measurement report to the collaboration requirement network element 1, and correspondingly, the collaboration requirement network element 1 receives the measurement report sent by the data supply network element 2.

S506: The data supply network element n sends a measurement report to the collaboration requirement network element 1, and correspondingly, the collaboration requirement network element 1 receives the measurement report sent by the data supply network element n.

Step S504 to step S506 are described as follows.

In a possible embodiment, the measurement report includes first feature information obtained by performing data feature measurement on the first data corresponding to the first service by each data supply network element.

In a possible embodiment, the measurement report further includes information about a computing power of each data supply network element for performing data feature measurement on the first data corresponding to the first service.

Specifically, for the measurement report, refer to the second information in step S303, and the measurement report may be understood as a specific example of the second information. Details are not described herein again.

According to this embodiment of this application, the measurement report fed back by each data supply network element (including but not limited to the data supply network element 1, the data supply network element 2, and the data supply network element n) to the collaboration requirement network element 1 includes at least one of the first feature information obtained by performing data feature measurement on the first data corresponding to the first service by each data supply network element (including but not limited to the data supply network element 1, the data supply network element 2, and the data supply network element n) and the information about the computing power of each data supply network element for performing data feature measurement on the first data corresponding to the first service. The measurement report may be used to assist the collaboration requirement network element 1 in clustering the data supply network elements and determining a first collaboration set used to perform the first service, to improve the collaboration efficiency of the network element and further improve the network AI performance.

S507: The collaboration requirement network element 1 clusters the data supply network elements based on the measurement reports, to obtain at least two clusters.

It can be learned from step S504 to step S506 that the measurement report includes the at least one of the first feature information obtained by performing data feature measurement on the first data corresponding to the first service by each data supply network element (including but not limited to the data supply network element 1, the data supply network element 2, and the data supply network element n) and the information about the computing power of each data supply network element for performing data feature measurement on the first data corresponding to the first service.

The collaboration requirement network element 1 may cluster data supply network elements based on at least one of gradient information corresponding to the data supply network elements (including but not limited to the data supply network element 1, the data supply network element 2, and the data supply network element n) and first computing power information corresponding to the data supply network elements (including but not limited to the data supply network element 1, the data supply network element 2, and the data supply network element n), to obtain at least two clusters, where each of the at least two clusters includes at least one network element, and determine, based on the at least two clusters, the first collaboration set used to perform the first service in a network element clustering application scenario.

In a possible embodiment, distribution of corresponding data in each of the at least two clusters meets a non-independent and identically distributed relationship, and distribution of corresponding data between the at least two clusters meets an independent and identically distributed relationship.

In a possible embodiment, a computing power value indicated by first computing power information corresponding to a network element in each of the at least two clusters is greater than a preset threshold. For example, the at least two clusters include the data supply network element 1, and a computing power value indicated by first computing power information corresponding to the data supply network element 1 is greater than a third threshold, or the computing power value indicated by the first computing power information corresponding to the data supply network element 1 is greater than or equal to the third threshold.

Specifically, for a case in which the collaboration requirement network element 1 determines, based on the measurement report, the first collaboration set used to perform the first service in the network element clustering application scenario, refer to the descriptions in step S304, and that the collaboration requirement network element 1 determines, based on the measurement report, the first collaboration set used to perform the first service in the network element clustering application scenario in step S407 may be understood as a specific example in which the first network element determines, based on the second information, the first collaboration set used to perform the first service in step S304. Details are not described herein again.

S508: The collaboration requirement network element 1 sends a clustering topology graph to the data supply network element 1, the data supply network element 2, or the data supply network element n, and correspondingly, the data supply network element 1, the data supply network element 2, or the data supply network element n receives the clustering topology graph sent by the collaboration requirement network element 1.

It can be learned from step S507 that the data supply network elements are clustered based on at least one of the gradient information corresponding to the data supply network elements and the first computing power information corresponding to the data supply network elements, to obtain the at least two clusters and the clustering topology graph corresponding to the at least two clusters. In addition, the first collaboration set used to perform the first service in the network element clustering application scenario may be determined based on the at least two clusters.

Optionally, the collaboration requirement network element 1 further sends the clustering topology graph to each collaboration network element included in the first collaboration set.

The first collaboration set includes one or more data supply network elements of the data supply network elements (including but not limited to the data supply network element 1, the data supply network element 2, and the data supply network element n).

For example, the first collaboration set includes the data supply network element 1, the data supply network element 2, and the data supply network element n. In this case, the collaboration requirement network element 1 sends the clustering topology graph to the data supply network element 1, the data supply network element 2, or the data supply network element n, and correspondingly, the data supply network element 1, the data supply network element 2, or the data supply network element n receives the clustering topology graph sent by the collaboration requirement network element 1.

In a possible embodiment, the collaboration requirement network element 1 may specifically send the clustering topology graph to the data supply network element 1, the data supply network element 2, and the data supply network element n in the following several manners.

**Manner 1:** The collaboration requirement network element 1 sends a broadcast message, and correspondingly, the data supply network element 1, the data supply network element 2, and the data supply network element n receive the broadcast message sent by the collaboration requirement network element 1. The broadcast message includes a message indicating the clustering topology graph. The broadcast message may include the clustering topology graph, or the broadcast message may include information such as an index or an identifier. The information such as the index or the identifier may indicate the clustering topology graph.

The data supply network element 1, the data supply network element 2, and the data supply network element n receive the clustering topology graph from the collaboration requirement network element 1 by receiving the broadcast message sent by the collaboration requirement network element 1.

It may be understood that step S508 in the manner 1 may be combined into one step.

**Manner 2:** The collaboration requirement network element 1 sends the clustering topology graph to the data supply network element 1, the data supply network element 2, and the data supply network element n based on a collaboration requirement of the collaboration requirement network element 1.

The data supply network element 1, the data supply network element 2, and the data supply network element n receive the clustering topology graph from the collaboration requirement network element 1 in a unicast manner.

It may be understood that step S508 needs to be performed separately in three steps in the manner 2, and there is no sequence when step S508 is performed.

It may be understood that the method for sending the clustering topology graph to the data supply network elements included in the first collaboration set in the foregoing manner 1 and manner 2 is merely used as an example of two methods for obtaining the clustering topology graph by the data supply network elements included in the first collaboration set, and should constitute no limitation on this embodiment of this application. Alternatively, the clustering topology graph may be obtained through exchange of other properly transformed information. This is not limited in this embodiment of this application.

According to this embodiment of this application, the data supply network elements included in the first collaboration set may obtain the clustering topology graph from the collaboration requirement network element 1 in a plurality of manners, to perform the first service based on the clustering topology graph.

According to this embodiment of this application, the collaboration requirement network element 1 may obtain gradient information and first computing power information that correspond to each data supply network element, perform clustering based on at least one of the gradient information and the first computing power information that correspond to each data supply network element, to obtain at least two clusters, where the at least two clusters meet a computing power needed for training and meet a feature topology relationship needed for training, and determines the first collaboration set based on a requirement of the first service for which the collaboration requirement network element 1 performs collaborative training, where the determined first collaboration set is used to perform the first service. This can improve collaboration efficiency of the network element, avoid invalid training, reduce energy consumption and transmission resources, and further improve network AI performance.

The foregoing describes the methods in embodiments of this application in detail. The following provides an apparatus for implementing any method in embodiments of this application. For example, an apparatus is provided, and the apparatus includes units (or means) configured to implement steps performed by a device in any one of the methods.

FIG. 6 is a diagram of a structure of a communication apparatus according to an embodiment of this application.

As shown in FIG. 6, the communication apparatus 60 may include a transceiver unit 601 and a processing unit 602. The transceiver unit 601 and the processing unit 602 may be software, hardware, or a combination of software and hardware.

The transceiver unit 601 may implement a sending function and/or a receiving function, and the transceiver unit 601 may also be described as a communication unit. Alternatively, the transceiver unit 601 may be a unit integrating an obtaining unit and a sending unit. The obtaining unit is configured to implement a receiving function, and the sending unit is configured to implement a sending function. Optionally, the transceiver unit 601 may be configured to receive information sent by another apparatus, and may be further configured to send information to the another apparatus.

In a possible design, the communication apparatus 60 may correspond to the first network element in the method embodiments shown in FIG. 3, FIG. 4, and FIG. 5. For example, the communication apparatus 60 may be the first network element, or may be a chip in the first network element. The communication apparatus 60 may include units configured to perform the operations performed by the first network element in the method embodiments shown in FIG. 3, FIG. 4, and FIG. 5. In addition, the units in the communication apparatus 60 are separately configured to implement the operations performed by the first network element in the method embodiments shown in FIG. 3, FIG. 4, and FIG. 5. The units are described as follows.

The transceiver unit 601 is configured to send first information, where the first information includes information about a first service for which the communication apparatus performs collaborative training, and the first information is used to request to perform data feature measurement on first data corresponding to the first service.

The transceiver unit 601 is further configured to receive second information, where the second information includes first feature information obtained by performing data feature measurement on the first data.

The processing unit 602 is configured to determine, based on the second information, a first collaboration set used to perform the first service.

In a possible implementation, the first information further includes at least one of the following: information about a first measurement model and information about a first measurement parameter. The first information is used to request to perform data feature measurement on the first data based on at least one of the first measurement model and the first measurement parameter.

In a possible implementation, the first feature information includes gradient information corresponding to a second network element, and the second network element includes a network element that performs data feature measurement on the first data.

In a possible implementation, the second information further includes first computing power information, and the first computing power information includes information about a computing power of the second network element for measuring the first data.

In a possible implementation, the processing unit 602 is specifically configured to obtain a data difference degree based on the gradient information corresponding to the second network element and gradient information corresponding to at least one third network element, where the data difference degree represents a difference between the first data in the second network element and data in the at least one third network element, and the data in the at least one third network element includes data that corresponds to the first service and that is in the at least one third network element.

The processing unit 602 is specifically configured to determine, based on at least one of the data difference degree and the first computing power information, the first collaboration set used to perform the first service.

In a possible implementation, the data difference degree includes:

$$\mathrm{DG} = \frac{\sum_{j=1}^{N}|\nabla\_j|^2 + |\nabla\_local|^2}{\left|\sum_{j=1}^{N}\nabla\_j + \nabla\_local\right|^2},$$

where
DG is the data difference degree, $\nabla\_local$ is the gradient information corresponding to the second network element, $\nabla\_j$ includes the gradient information corresponding to the at least one third network element, and N is a quantity of third network elements.

In a possible implementation, the processing unit 602 is further configured to: when the data difference degree is less than or equal to a first threshold, add the second network element to the first collaboration set; or

the processing unit 602 is further configured to: when a computing power value indicated by the first computing power information is greater than a second threshold, add the second network element to the first collaboration set; or
the processing unit 602 is further configured to: when the data difference degree is less than or equal to a first threshold and a computing power value indicated by the first computing power information is greater than a second threshold, add the second network element to the first collaboration set.

In a possible implementation, the processing unit 602 is specifically configured to cluster the second network element and at least one fourth network element based on the gradient information corresponding to the second network element and gradient information corresponding to the at least one fourth network element, to obtain at least two clusters, where each of the at least two clusters includes at least one network element.

The processing unit 602 is specifically configured to determine, based on the at least two clusters, the first collaboration set used to perform the first service.

In a possible implementation, the at least two clusters meet the following relationship:
distribution of corresponding data in each of the at least two clusters meets a non-independent and identically distributed relationship, and distribution of corresponding data between the at least two clusters meets an independent and identically distributed relationship.

In a possible implementation, the at least two clusters include the second network element, and a computing power value indicated by the first computing power information corresponding to the second network element is greater than a third threshold.

In another possible design, the communication apparatus 60 may correspond to the second network element in the method embodiments shown in FIG. 3, FIG. 4, and FIG. 5. For example, the communication apparatus 60 may be the second network element, or may be a chip in the second network element. The communication apparatus 60 may include units configured to perform the operations performed by the second network element in the method embodiments shown in FIG. 3, FIG. 4, and FIG. 5. In addition, the units in the communication apparatus 60 are separately configured to implement the operations performed by the second network element in the method embodiments shown in FIG. 3, FIG. 4, and FIG. 5. The units are described as follows.

The transceiver unit 601 is configured to receive first information from a first network element, where the first information includes information about a first service for which the first network element performs collaborative training, and the first information is used to request the communication apparatus to perform data feature measurement on first data corresponding to the first service.

The processing unit 602 is configured to perform data feature measurement on the first data, to obtain first feature information.

The transceiver unit 601 is further configured to send second information to the first network element, where the second information includes the first feature information, the second information is used to determine a first collaboration set, and the first collaboration set is used to perform the first service.

In a possible implementation, the first information further includes at least one of the following: information about a first measurement model and information about a first measurement parameter. The first information is used to request the communication apparatus to perform data feature measurement on the first data based on at least one of the first measurement model and the first measurement parameter.

In a possible implementation, the first feature information includes gradient information corresponding to the communication apparatus.

In a possible implementation, the second information further includes first computing power information, and the first computing power information includes information about a computing power of the communication apparatus for measuring the first data.

In a possible implementation, that the second information is used to determine the first collaboration set includes:
The gradient information corresponding to the communication apparatus and gradient information corresponding to at least one third network element are used to determine a data difference degree, and at least one of the data difference degree and the first computing power information is used to determine the first collaboration set.

The data difference degree represents a difference between the first data in the communication apparatus and data in the at least one third network element, and the data in the at least one third network element includes data that corresponds to the first service and that is in the at least one third network element.

In a possible implementation, the data difference degree includes:

$$DG = \frac{\sum_{j=1}^{N}|\nabla\_j|^2 + |\nabla\_local|^2}{\left|\sum_{j=1}^{N}\nabla\_j + \nabla\_local\right|^2},$$

where
DG is the data difference degree, $\nabla\_local$ is the gradient information corresponding to the communication apparatus, $\nabla\_j$ includes the gradient information corresponding to the at least one third network element, and N is a quantity of third network elements.

In a possible implementation, that at least one of the data difference degree and the first computing power information is used to determine the first collaboration set includes:

When the data difference degree is less than or equal to a first threshold, the first collaboration set includes the communication apparatus; or
when a computing power value indicated by the first computing power information is greater than a second threshold, the first collaboration set includes the communication apparatus; or
when the data difference degree is less than or equal to a first threshold and a computing power value indicated by the first computing power information is greater than a second threshold, the first collaboration set includes the communication apparatus.

In a possible implementation, that the second information is used to determine the first collaboration set includes:
The gradient information corresponding to the communication apparatus and gradient information corresponding to at least one fourth network element are used to determine at least two clusters, each of the at least two clusters includes at least one network element, and the at least two clusters are used to determine the first collaboration set.

In a possible implementation, the at least two clusters meet the following relationship:
distribution of corresponding data in each of the at least two clusters meets a non-independent and identically distributed relationship, and distribution of corresponding data between the at least two clusters meets an independent and identically distributed relationship.

In a possible implementation, the at least two clusters include the communication apparatus, and a computing power value indicated by the first computing power information corresponding to the communication apparatus is greater than a third threshold.

According to this embodiment of this application, a part or all of the units of the apparatus shown in FIG. 6 may be combined into one or more other units, or one (or more) of the units may be divided into a plurality of smaller functional units. In this way, same operations can be implemented without affecting achievement of technical effects of embodiments of this application. The foregoing units are obtained through division based on logical functions. In actual application, a function of one unit may be implemented by a plurality of units, or functions of a plurality of units may be implemented by one unit. In another embodiment of this application, an electronic device may alternatively include another unit. In actual application, the functions may be implemented with assistance of the another unit, and may be implemented by a plurality of units in collaboration.

It should be noted that, for implementation of each unit, refer to the corresponding descriptions in the method embodiments shown in FIG. 3, FIG. 4, and FIG. 5.

In the communication apparatus 60 described in FIG. 6, a collaboration requirement network element obtains a data feature of each data supply network element by sending first information and receiving second information, so that a first collaboration set can be determined based on a requirement of a first service for which the collaboration requirement network element performs collaborative training, where the determined first collaboration set is used to perform the first service. This can improve collaboration efficiency of the network element, avoid invalid training, reduce energy consumption and transmission resources, and further improve network AI performance.

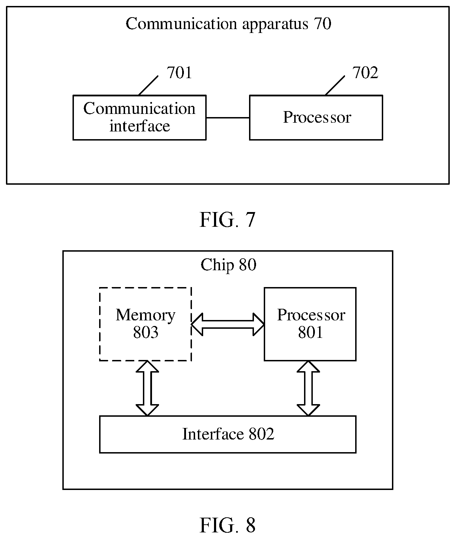

FIG. 7 is a diagram of a structure of a communication apparatus according to an embodiment of this application.

It should be understood that the communication apparatus 70 shown in FIG. 7 is merely an example. The communication apparatus in this embodiment of this application may further include another component, or include a component with a function similar to that of each component in FIG. 7, or does not necessarily need to include all components in FIG. 7.

The communication apparatus 70 includes a communication interface 701 and at least one processor 702.

The communication apparatus 70 may correspond to any network element of a first network element or a second network element or any device. The communication interface 701 is configured to receive and send signals, and the at least one processor 702 executes program instructions, to enable the communication apparatus 70 to implement a corresponding procedure of a method performed by a corresponding device in the foregoing method embodiments.

In a possible design, the communication apparatus 70 may correspond to the first network element in the method embodiments shown in FIG. 3, FIG. 4, and FIG. 5. For example, the communication apparatus 70 may be the first network element, or may be a chip in the first network element. The communication apparatus 70 may include components configured to perform the operations performed by the first network element in the method embodiments. In addition, the components in the communication apparatus 70 are separately configured to implement the operations performed by the first network element in the method embodiments. Details may be as follows.

The first network element sends first information, where the first information includes information about a first service for which the first network element performs collaborative training, and the first information is used to request to perform data feature measurement on first data corresponding to the first service.

The first network element receives second information, where the second information includes first feature information obtained by performing data feature measurement on the first data.

The first network element determines, based on the second information, a first collaboration set used to perform the first service.

In a possible implementation, the first information further includes at least one of the following: information about a first measurement model and information about a first measurement parameter. The first information is used to request to perform data feature measurement on the first data based on at least one of the first measurement model and the first measurement parameter.

In a possible implementation, the first feature information includes gradient information corresponding to a second network element, and the second network element includes a network element that performs data feature measurement on the first data.

In a possible implementation, the second information further includes first computing power information, and the first computing power information includes information about a computing power of the second network element for measuring the first data.

In a possible implementation, the determining, based on the second information, a first collaboration set used to perform the first service includes:

obtaining a data difference degree based on the gradient information corresponding to the second network element and gradient information corresponding to at least one third network element, where the data difference degree represents a difference between the first data in the second network element and data in the at least one third network element, and the data in the at least one third network element includes data that corresponds to the first service and that is in the at least one third network element; and
determining, based on at least one of the data difference degree and the first computing power information, the first collaboration set used to perform the first service.

In a possible implementation, the data difference degree includes:

$$DG = \frac{\sum_{j=1}^{N}|\nabla\_j|^2 + |\nabla\_local|^2}{\left|\sum_{j=1}^{N}\nabla\_j + \nabla\_local\right|^2},$$

where

DG is the data difference degree, $\nabla\_local$ is the gradient information corresponding to the second network element, $\nabla\_j$ includes the gradient information corresponding to the at least one third network element, and N is a quantity of third network elements.

In a possible implementation, the determining, based on at least one of the data difference degree and the first computing power information, the first collaboration set used to perform the first service includes:

when the data difference degree is less than or equal to a first threshold, adding the second network element to the first collaboration set; or
when a computing power value indicated by the first computing power information is greater than a second threshold, adding the second network element to the first collaboration set; or
when the data difference degree is less than or equal to the first threshold and a computing power value indicated by the first computing power information is greater than the second threshold, adding the second network element to the first collaboration set.

In a possible implementation, the determining, based on the second information, a first collaboration set used to perform the first service includes:

clustering the second network element and at least one fourth network element based on the gradient information corresponding to the second network element and gradient information corresponding to the at least one fourth network element, to obtain at least two clusters, where each of the at least two clusters includes at least one network element; and determining, based on the at least two clusters, the first collaboration set used to perform the first service.

In a possible implementation, the at least two clusters meet the following relationship:
distribution of corresponding data in each of the at least two clusters meets a non-independent and identically distributed relationship, and distribution of corresponding data between the at least two clusters meets an independent and identically distributed relationship.

In a possible implementation, the at least two clusters include the second network element, and a computing power value indicated by the first computing power information corresponding to the second network element is greater than a third threshold.

In another possible design, the communication apparatus 70 may correspond to the second network element in the method embodiments shown in FIG. 3, FIG. 4, and FIG. 5. For example, the communication apparatus 70 may be the second network element, or may be a chip in the second network element. The communication apparatus 70 may include components configured to perform the operations performed by the second network element in the method embodiments. In addition, the components in the communication apparatus 70 are separately configured to implement the operations performed by the second network element in the method embodiments. Details may be as follows.

The second network element receives first information from a first network element, where the first information includes information about a first service for which the first network element performs collaborative training, and the first information is used to request the second network element to perform data feature measurement on first data corresponding to the first service.

The second network element performs data feature measurement on the first data, to obtain first feature information.

The second network element sends second information to the first network element, where the second information includes the first feature information, the second information is used to determine a first collaboration set, and the first collaboration set is used to perform the first service.

In a possible implementation, the first information further includes at least one of the following: information about a first measurement model and information about a first measurement parameter. The first information is used to request the second network element to perform data feature measurement on the first data based on at least one of the first measurement model and the first measurement parameter.

In a possible implementation, the first feature information includes gradient information corresponding to the second network element.

In a possible implementation, the second information further includes first computing power information, and the first computing power information includes information about a computing power of the second network element for measuring the first data.

In a possible implementation, that the second information is used to determine the first collaboration set includes:
The gradient information corresponding to the second network element and gradient information corresponding to at least one third network element are used to determine a data difference degree, and at least one of the data difference degree and the first computing power information is used to determine the first collaboration set.

The data difference degree represents a difference between the first data in the second network element and data in the at least one third network element, and the data in the at least one third network element includes data that corresponds to the first service and that is in the at least one third network element.

In a possible implementation, the data difference degree includes:

$$DG = \frac{\sum_{j=1}^{N} |\nabla\_j|^2 + |\nabla\_local|^2}{\left|\sum_{j=1}^{N} \nabla\_j + \nabla\_local\right|^2},$$

where

DG is the data difference degree, $\nabla\_local$ is the gradient information corresponding to the second network element, $\nabla\_j$ includes the gradient information corresponding to the at least one third network element, and N is a quantity of third network elements.

In a possible implementation, that at least one of the data difference degree and the first computing power information is used to determine the first collaboration set includes:

> When the data difference degree is less than or equal to a first threshold, the first collaboration set includes the second network element; or
> when a computing power value indicated by the first computing power information is greater than a second threshold, the first collaboration set includes the second network element; or
> when the data difference degree is less than or equal to a first threshold and a computing power value indicated by the first computing power information is greater than a second threshold, the first collaboration set includes the second network element.

In a possible implementation, that the second information is used to determine the first collaboration set includes:

The gradient information corresponding to the second network element and gradient information corresponding to at least one fourth network element are used to determine at least two clusters, each of the at least two clusters includes at least one network element, and the at least two clusters are used to determine the first collaboration set.

In a possible implementation, the at least two clusters meet the following relationship:

distribution of corresponding data in each of the at least two clusters meets a non-independent and identically distributed relationship, and distribution of corresponding data between the at least two clusters meets an independent and identically distributed relationship.

In a possible implementation, the at least two clusters include the second network element, and a computing power value indicated by the first computing power information corresponding to the second network element is greater than a third threshold.

In the communication apparatus 70 described in FIG. 7, a collaboration requirement network element obtains a data feature of each data supply network element by sending first information and receiving second information, so that a first collaboration set can be determined based on a requirement of a first service for which the collaboration requirement network element performs collaborative training, where the determined first collaboration set is used to perform the first service. This can improve collaboration efficiency of the network element, avoid invalid training, reduce energy consumption and transmission resources, and further improve network AI performance.

For a case in which the communication apparatus may be a chip or a chip system, refer to a diagram of a structure of a chip shown in FIG. 8.

As shown in FIG. 8, the chip 80 includes a processor 801 and an interface 802. There may be one or more processors 801, and there may be a plurality of interfaces 802. It should be noted that functions corresponding to each of the processor 801 and the interface 802 may be implemented by using hardware design, may be implemented by using software design, or may be implemented by using a combination of software and hardware. This is not limited herein.

Optionally, the chip 80 may further include a memory 803. The memory 803 is configured to store necessary program instructions and data.

In this application, the processor 801 may be configured to invoke, from the memory 803, a program for implementing, on one or more devices or network elements of the first network element, and the second network element, the data feature measurement method provided in one or more embodiments of this application, and execute instructions included in the program. The interface 802 may be configured to output an execution result of the processor 801. In this application, the interface 802 may be specifically configured to output messages or information of the processor 801.

For the data feature measurement method provided in one or more embodiments of this application, refer to embodiments shown in FIG. 3, FIG. 4, and FIG. 5. Details are not described herein again.

The processor in this embodiment of this application may be a central processing unit (Central Processing Unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory in this embodiment of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 3, FIG. 4, and FIG. 5 may be implemented.

According to the methods provided in embodiments of this application, an embodiment of this application further provides a computer program product. The computer program product includes a computer program. When the computer program is run on a processor, the methods shown in FIG. 3, FIG. 4, and FIG. 5 may be implemented.

An embodiment of this application further provides a system. The system includes at least one of the communication apparatus 60, the communication apparatus 70, or the chip 80, and is configured to perform steps performed by a corresponding device in any embodiment of embodiments in FIG. 3, FIG. 4, and FIG. 5.

An embodiment of this application further provides a system. The system includes a first network element and a second network element. The first network element is configured to perform the steps performed by the first network element in any one of embodiments in FIG. 3, FIG. 4, and FIG. 5. The second network element is configured to perform the steps performed by the second network element in any one of embodiments in FIG. 3, FIG. 4, and FIG. 5.

An embodiment of this application further provides a processing apparatus. The processing apparatus includes a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processing unit (central processor unit, CPU), may be a network processor (network processor, NP), may be a digital signal processing circuit (digital signal processor, DSP), may be a micro controller unit (micro controller unit, MCU), and may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly performed by a hardware decoding processor, or may be performed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid-state drive, SSD)), or the like.

The units in the foregoing apparatus embodiments totally correspond to electronic devices in the method embodiments, and corresponding modules or units perform corresponding steps. For example, the communication unit (transceiver) performs receiving or sending steps in the method embodiments, and steps other than sending and receiving may be performed by the processing unit (processor). For a function of a specific unit, refer to a corresponding method embodiment. There may be one or more processors.

It may be understood that in embodiments of this application, the electronic device may perform some or all of the steps in embodiments of this application. These steps or operations are merely examples. In embodiments of this application, other operations or various variations of the operations may be further performed. In addition, the steps may be performed in different sequences presented in embodiments of this application, and not all operations in embodiments of this application need to be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part making contributions, or some of the technical solutions may be implemented in a form of a computer software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A data feature measurement method, comprising:

sending, by a first network element, first information, wherein the first information comprises information about a first service for which the first network element performs collaborative training, and the first information is used to request to perform data feature measurement on first data corresponding to the first service;

receiving, by the first network element, second information, wherein the second information comprises first feature information obtained by performing data feature measurement on the first data; and

determining, by the first network element based on the second information, a first collaboration set used to perform the first service.

2. The method according to claim 1, wherein the first information further comprises at least one of the following: information about a first measurement model and information about a first measurement parameter; and the first information is used to request to perform data feature measurement on the first data based on at least one of the first measurement model and the first measurement parameter.

3. The method according to claim 1 or 2, wherein the first feature information comprises gradient information corresponding to a second network element, and the second network element comprises a network element that performs data feature measurement on the first data.

4. The method according to any one of claims 1 to 3, wherein the second information further comprises first computing power information, and the first computing power information comprises information about a computing power of the second network element for measuring the first data.

5. The method according to any one of claims 1 to 4, wherein the determining, based on the second information, a first collaboration set used to perform the first service comprises:

   obtaining a data difference degree based on the gradient information corresponding to the second network element and gradient information corresponding to at least one third network element, wherein the data difference degree represents a difference between the first data in the second network element and data in the at least one third network element, and the data in the at least one third network element comprises data that corresponds to the first service and that is in the at least one third network element; and
   determining, based on at least one of the data difference degree and the first computing power information, the first collaboration set used to perform the first service.

6. The method according to claim 5, wherein the data difference degree comprises:

$$DG = \frac{\sum_{j=1}^{N} |\nabla\_j|^2 + |\nabla\_local|^2}{\left|\sum_{j=1}^{N} \nabla\_j + \nabla\_local\right|^2},$$

wherein

DG is the data difference degree, $\nabla\_local$ is the gradient information corresponding to the second network element, $\nabla\_j$ comprises the gradient information corresponding to the at least one third network element, and N is a quantity of third network elements.

7. The method according to claim 5 or 6, wherein the determining, based on at least one of the data difference degree and the first computing power information, the first collaboration set used to perform the first service comprises:

   when the data difference degree is less than or equal to a first threshold, adding the second network element to the first collaboration set; or
   when a computing power value indicated by the first computing power information is greater than a second threshold, adding the second network element to the first collaboration set; or
   when the data difference degree is less than or equal to a first threshold and a computing power value indicated by the first computing power information is greater than a second threshold, adding the second network element to the first collaboration set.

8. The method according to any one of claims 1 to 4, wherein the determining, based on the second information, a first collaboration set used to perform the first service comprises:

   clustering the second network element and at least one fourth network element based on the gradient information corresponding to the second network element and gradient information corresponding to the at least one fourth network element, to obtain at least two clusters, wherein each of the at least two clusters comprises at least one network element; and
   determining, based on the at least two clusters, the first collaboration set used to perform the first service.

9. The method according to claim 8, wherein the at least two clusters meet the following relationship: distribution of corresponding data in each of the at least two clusters meets a non-independent and identically distributed relationship, and distribution of corresponding data between the at least two clusters meets an independent and identically distributed relationship.

10. The method according to claim 8 or 9, wherein the at least two clusters comprise the second network element, and a computing power value indicated by the first computing power information corresponding to the second network element is greater than a third threshold.

11. A data feature measurement method, comprising:

receiving, by a second network element, first information from a first network element, wherein the first information comprises information about a first service for which the first network element performs collaborative training, and the first information is used to request the second network element to perform data feature measurement on first data corresponding to the first service;
performing, by the second network element, data feature measurement on the first data, to obtain first feature information; and
sending, by the second network element, second information to the first network element, wherein the second information comprises the first feature information, the second information is used to determine a first collaboration set, and the first collaboration set is used to perform the first service.

12. The method according to claim 11, wherein the first information further comprises at least one of the following: information about a first measurement model and information about a first measurement parameter; and the first information is used to request the second network element to perform data feature measurement on the first data based on at least one of the first measurement model and the first measurement parameter.

13. The method according to claim 11 or 12, wherein the first feature information comprises gradient information corresponding to the second network element.

14. The method according to any one of claims 11 to 13, wherein the second information further comprises first computing power information, and the first computing power information comprises information about a computing power of the second network element for measuring the first data.

15. The method according to any one of claims 11 to 14, wherein that the second information is used to determine the first collaboration set comprises:

the gradient information corresponding to the second network element and gradient information corresponding to at least one third network element are used to determine a data difference degree, and at least one of the data difference degree and the first computing power information is used to determine the first collaboration set, wherein
the data difference degree represents a difference between the first data in the second network element and data in the at least one third network element, and the data in the at least one third network element comprises data that corresponds to the first service and that is in the at least one third network element.

16. The method according to claim 15, wherein the data difference degree comprises:

$$DG = \frac{\sum_{j=1}^{N}|\nabla\_j|^2 + |\nabla\_local|^2}{\left|\sum_{j=1}^{N}\nabla\_j + \nabla\_local\right|^2},$$

wherein
DG is the data difference degree, $\nabla\_local$ is the gradient information corresponding to the second network element, $\nabla\_j$ comprises the gradient information corresponding to the at least one third network element, and N is a quantity of third network elements.

17. The method according to claim 15 or 16, wherein that at least one of the data difference degree and the first computing power information is used to determine the first collaboration set comprises:

when the data difference degree is less than or equal to a first threshold, the first collaboration set comprises the second network element; or
when a computing power value indicated by the first computing power information is greater than a second threshold, the first collaboration set comprises the second network element; or
when the data difference degree is less than or equal to a first threshold and a computing power value indicated by the first computing power information is greater than a second threshold, the first collaboration set comprises the second network element.

18. The method according to any one of claims 11 to 14, wherein that the second information is used to determine the first collaboration set comprises:
the gradient information corresponding to the second network element and gradient information corresponding to at least one fourth network element are used to determine at least two clusters, each of the at least two clusters comprises at least one network element, and the at least two clusters are used to determine the first collaboration set.

19. The method according to claim 18, wherein the at least two clusters meet the following relationship: distribution of corresponding data in each of the at least two clusters meets a non-independent and identically distributed relationship, and corresponding data between the at least two clusters meets an independent and identically distributed relationship.

20. The method according to claim 18 or 19, wherein the at least two clusters comprise the second network element, and a computing power value indicated by the first computing power information corresponding to the second network element is greater than a third threshold.

21. A communication apparatus, comprising:

a transceiver unit, configured to send first information, wherein the first information comprises information about a first service for which the communication apparatus performs collaborative training, and the first information is used to request to perform data feature measurement on first data corresponding to the first service, wherein

the transceiver unit is further configured to receive second information, wherein the second information comprises first feature information obtained by performing data feature measurement on the first data; and

a processing unit, configured to determine, based on the second information, a first collaboration set used to perform the first service.

22. A communication apparatus, comprising:

a transceiver unit, configured to receive first information from a first network element, wherein the first information comprises information about a first service for which the first network element performs collaborative training, and the first information is used to request the communication apparatus to perform data feature measurement on first data corresponding to the first service; and

a processing unit, configured to perform data feature measurement on the first data, to obtain first feature information, wherein

the transceiver unit is further configured to send second information to the first network element, wherein the second information comprises the first feature information, the second information is used to determine a first collaboration set, and the first collaboration set is used to perform the first service.

23. A communication apparatus, comprising a processor, wherein

when the processor invokes a computer program or instructions in a memory, the method according to any one of claims 1 to 10 is performed, or the method according to any one of claims 11 to 20 is performed.

24. A communication apparatus, comprising a logic circuit and an interface, wherein the logic circuit is coupled to the interface; and

the interface is configured to input to-be-processed data, the logic circuit processes the to-be-processed data according to the method according to any one of claims 1 to 10 or claims 11 to 20, to obtain processed data, and the interface is configured to output the processed data.

25. A computer-readable storage medium, wherein the computer-readable storage medium is configured to store instructions or a computer program; and when the instructions are executed or the computer program is executed, the method according to any one of claims 1 to 10 is implemented, or the method according to any one of claims 11 to 20 is implemented.

26. A computer program product, comprising instructions or a computer program, wherein when the instructions are executed or the computer program is executed, the method according to any one of claims 1 to 10 is performed, or the method according to any one of claims 11 to 20 is performed.

27. A communication system, comprising at least one of the following: the communication apparatus according to claim 21, the communication apparatus according to claim 22, the communication apparatus according to the claim 23, and the communication apparatus according to claim 24.

28. A communication system, comprising a first network element and a second network element, wherein the first network element is configured to perform the method according to any one of claims 1 to 10, and the second network element is configured to perform the method according to any one of claims 11 to 20.

FIG. 1

District or
city level | cNB

Street level | cNB

Cell level | sNB 1 | sNB 2

Terminal
level | UE 1 | UE 2 | UE 3 | UE 4 | UE 5

FIG. 2

First network
element

Second network
element

S301: First information

S302: Perform data feature
measurement on first data, to
obtain first feature information

S303: Second information

S304: Determine, based on the
second information, a first
collaboration set used to
perform a first service

FIG. 3

| Collaboration requirement network element 1 | Data supply network element 1 | Data supply network element 2 | Data supply network element n |
|---|---|---|---|

S401: Measurement message

S402: Measurement message

S403: Measurement message

S404: Measurement report

S405: Measurement report

S406: Measurement report

S407: Determine, based on the measurement reports, a first collaboration set used to perform a first service

S408: Perform the first service

FIG. 4

| Collaboration requirement network element 1 | Data supply network element 1 | Data supply network element 2 | Data supply network element n |
|---|---|---|---|

S501: Measurement message

S502: Measurement message

S503: Measurement message

S504: Measurement report

S505: Measurement report

S506: Measurement report

S507: Cluster data supply network elements based on the measurement reports, to obtain at least two clusters

S508: Clustering topology graph

FIG. 5

Communication apparatus 60

601

Transceiver unit

602

Processing unit

FIG. 6

Communication apparatus 70

701

Communication interface

702

Processor

FIG. 7

Chip 80

Memory 803

Processor 801

Interface 802

FIG. 8

## INTERNATIONAL SEARCH REPORT

| International application No. |
|---|
| **PCT/CN2022/112596** |

| A. | CLASSIFICATION OF SUBJECT MATTER |
|---|---|
| | H04W 8/24(2009.01)i |

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

VEN, CNTXT, USTXT, CNKI: 网元, 第一, 第二, 请求, 测量, 协作, 添加, 加入, 配置, 特征, 训练, 梯度, 模型, model, network, data, request, element, add, train+, feature, first, second

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 108632811 A (ZTE CORP.) 09 October 2018 (2018-10-09)<br>description, paragraphs 0028-0127 | 1-4, 11-14, 21-28 |
| Y | CN 114402341 A (HUAWEI TECHNOLOGIES CO., LTD.) 26 April 2022 (2022-04-26)<br>claims 1-20 | 1-4, 11-14, 21-28 |
| A | CN 114158076 A (CHINA UNITED NETWORK COMMUNICATIONS GROUP CO.,<br>LTD.) 08 March 2022 (2022-03-08)<br>entire document | 1-28 |
| A | EP 2938114 A1 (ALCATEL LUCENT) 28 October 2015 (2015-10-28)<br>entire document | 1-28 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 December 2022** | **26 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/112596**

| Patent document cited in search report | | | Publication date (day/month/year) | Patent family member(s) | | | Publication date (day/month/year) |
|---|---|---|---|---|---|---|---|
| CN | 108632811 | A | 09 October 2018 | WO | 2018171721 | A1 | 27 September 2018 |
| CN | 114402341 | A | 26 April 2022 | WO | 2021062740 | A1 | 08 April 2021 |
| | | | | EP | 4027584 | A1 | 13 July 2022 |
| | | | | US | 2022224603 | A1 | 14 July 2022 |
| CN | 114158076 | A | 08 March 2022 | None | | | |
| EP | 2938114 | A1 | 28 October 2015 | None | | | |

Form PCT/ISA/210 (patent family annex) (January 2015)